# FASCICULE DE BREVET EUROPEEN

(11) **EP 2 717 199 B1**
(45) Date de publication et mention de la délivrance du brevet: **15.07.2015**
(21) Numéro de dépôt: 13184251.0
(22) Date de dépôt: 13.09.2013
(51) Int. Cl.: G06K 19/077

(54) **Dispositif et procédé de personnalisation de composants électroniques**
Vorrichtung und Verfahren zur Personalisierung von elektronischen Bauteilen
Device and method for customising electronic components

(30) Priorité: 03.10.2012 FR 1259391
(43) Date de publication de la demande: 09.04.2014
(73) Titulaire: Smartware, 91940 Les Ulis (FR)
(72) Inventeur: Medioni, Stéphane, 92160 ANTONY (FR); Mailliot, Simon, 91120 PALAISEAU (FR)
(74) Mandataire: Debay, Yves

(56) Documents cités:
- EP-A1- 1 420 361
- DE-A1-102009 035 939

## Description

### DOMAINE TECHNIQUE DE L'INVENTION

La présente invention se rapporte au domaine de la personnalisation des composants électronique. En particulier l'invention, née du besoin de personnaliser des composants électroniques de manière fiable, rapide et économique, se rapporte à un dispositif de personnalisation de composants électroniques et à un procédé de personnalisation mis en oeuvre par un tel dispositif.

### ARRIERE-PLAN TECHNOLOGIQUE DE L'INVENTION

De façon connue en soi, il existe sur le marché de nombreux appareillages destinés à la personnalisation de puces, microcircuits ou tout autre composant électronique. Cette personnalisation de composants inclut la personnalisation électrique, c'est à dire l'écriture, via un programmateur, d'au moins un programme de fonctionnement et/ou d'au moins une information dans une zone mémoire du composant. La personnalisation peut également inclure une personnalisation graphique, c'est à dire la gravure d'informations sur le composants électronique, cette gravure pouvant être par exemple réalisée à l'aide d'un laser ou par enlèvement de matière.

La personnalisation à l'échelle industrielle de composants électroniques, souvent conditionnés sous forme de bobines, est réalisée sur des systèmes comprenant plusieurs supports d'accueil, à savoir au moins un support d'accueil de composants pour le chargement et le déchargement des composants, et au moins un poste de personnalisation électrique. Généralement, et ce afin d'assurer en sortie de chaîne un taux de réussite élevé de la personnalisation des composants électroniques, il est courant que les dispositifs de personnalisation de l'art antérieur comprennent également au moins un poste de vérification des informations de personnalisation intégrées dans et sur chaque composant électronique.

Ces systèmes de personnalisation comprennent au moins un bras mécanique et/ou robotisé, se déplaçant suivant les trois axes d'un repère orthogonal. Ces systèmes présentent en l'occurrence l'inconvénient de devoir utiliser un tel bras mécanique et/ou robotisé pour déplacer les composants électroniques de support en support, au gré des opérations de personnalisation devant être effectuées.

D'autre part, chaque support d'accueil de composants électroniques d'un système de personnalisation comprend une pluralité de logements ou "sockets", destinés à stocker chaque composant électronique faisant l'objet de la personnalisation électrique et/ou graphique. Chacun de ces logements comprend une pluralité de plots conducteurs, entrant en contact avec les bornes, ou plage de contacts, du composant présent dans le logement. Ainsi, pour chaque support d'accueil nécessitant une personnalisation ou vérification électrique, les logements dudit support devront comprendre des plots conducteurs, dont la configuration dépend de la configuration de la plage de contacts du composant. Cela limite donc le nombre de composants pouvant être personnalisés en même temps.

Même si le taux d'erreur de personnalisation est parfaitement acceptable avec les systèmes de l'art antérieur, il est difficile de savoir précisément la cause d'un échec de la personnalisation d'un composant électronique. Il est par conséquent difficile d'établir une statistique visant à améliorer les rendements de production, voire de récupérer certains composants réutilisables.

Enfin, les systèmes de personnalisation de l'art antérieur ne proposent pas la possibilité de personnaliser des composants électroniques avec des informations différentes au cours d'un même cycle de programmation d'une pluralité de composants électronique, généralement appartenant à une même bobine de stockage. Le document EP 1 420 361 A1 décrit un tel système de personnalisation.

### DESCRIPTION GENERALE DE L'INVENTION

La présente invention a pour objet de proposer un système de personnalisation de composants électroniques, et un procédé mis en oeuvre par un tel dispositif, permettant de résoudre au moins une partie des problèmes exposés ci-dessus. L'invention propose un nouveau dispositif permettant la personnalisation électrique et graphique fiable et rapide d'une pluralité de composants électroniques, les informations de personnalisation pouvant être spécifiques à un composant ou à un groupe de composants, et le nombre de plots de contacts nécessaires à cette personnalisation étant indépendant du nombre de supports d'accueil intégrés dans le système de personnalisation.

A cet effet, l'invention concerne un système de personnalisation de composants électroniques, **caractérisé en ce qu'il** comprend :
- au moins un plateau tournant dans un plan (x, y) ayant un mouvement circulaire assuré par des moyens de déplacement commandés par les moyens informatiques, le plateau tournant étant rendu solidaire d'au moins un support d'accueil comportant une matrice de logements de n lignes et m colonnes, les logements étant destinés à recevoir chacun un composant électronique, les moyens informatiques recevant les coordonnées de la position de chaque support d'accueil, enregistrées dans un espace mémoire des moyens informatiques, assurant ainsi le suivi desdits supports d'accueil,
- au moins un système d'approvisionnement des composants électroniques, tangentielle au plateau tournant,
- au moins un dispositif de personnalisation au moins électrique avec ou sans contact, disposé sur le trajet de chaque support d'accueil, le dispositif de personnalisation électrique permettant la personnalisation des composants électroniques d'un même support d'accueil, les composants de chaque support d'accueil solidaire du plateau tournant étant successivement personnalisables au moins électriquement,
- au moins un poste de rejet comprenant au moins un bac, et une zone matricielle comportant une pluralité d'alvéoles pour le stockage temporaire de composants, le poste de rejet et la zone de stockage temporaire pouvant être positionnés d'un côté ou de l'autre du plateau tournant,
- des moyens informatiques pour positionner et déplacer des moyens de transport, commander la saisie et le transport d'une pluralité de composants alignés selon la direction y, les moyens de transport se déplaçant le long d'un axe perpendiculaire, dans la direction x entre la zone de stockage temporaire, le poste de rejet, le système d'approvisionnement et chaque ligne ou colonne de la matrice de logements de chaque support d'accueil présenté par le plateau tournant aux moyens de transport.

Selon une autre particularité, le système de personnalisation est **caractérisé en ce que** le dispositif de personnalisation électrique est un dispositif de personnalisation avec contact, comportant des bornes conductrices et étant rendu solidaire de moyens de déplacement dans une direction perpendiculaire au plateau, pilotés par les moyens informatiques, chaque borne du dispositif de personnalisation électrique étant connectable à chaque plage de contacts des composants électroniques présents dans les logements d'un support d'accueil lorsque le plateau tournant est immobile en rotation.

Selon une autre particularité, le système de personnalisation est **caractérisé en ce que** le dispositif de personnalisation électrique est un dispositif de personnalisation sans contact comportant une pluralité d'antennes radiofréquence et pouvant être rendu solidaire de moyens de déplacement dans une direction perpendiculaire au plateau, pilotés par les moyens informatiques, chaque antenne du dispositif de personnalisation sans contact étant connectable sans contact à un microcircuit des composants électroniques présents dans les logements d'un support d'accueil.

Selon une autre particularité, le système de personnalisation est **caractérisé en ce que** le système de personnalisation comprend un dispositif de personnalisation électrique avec contact et un dispositif de personnalisation électrique sans contact disposés en vis-à-vis d'un même support d'accueil de part et d'autre du plateau tournant, personnalisant des composants électroniques d'un même support d'accueil, ces composants comprenant au moins un microcircuit relié électriquement aux plages de contacts et au moins un microcircuit pouvant être personnalisé avec des ondes radiofréquence, les différents microcircuits pouvant être personnalisés simultanément ou séquentiellement.

Selon une autre particularité, le système de personnalisation est **caractérisé en ce que** le système de personnalisation comprend un dispositif de personnalisation avec contact et un dispositif de personnalisation sans contact disposés en vis-à-vis de deux supports d'accueil différents, les composants de chaque support d'accueil solidaire du plateau tournant étant successivement personnalisables électriquement.

Selon une autre particularité, le système de personnalisation est **caractérisé en ce** qu'il comprend un agencement pour reconnaitre la position, sur chaque support d'accueil, de chaque composant à personnaliser et/ou en cours de personnalisation et/ou personnalisé.

Selon une autre particularité, le système de personnalisation est **caractérisé en ce que** chaque logement d'un support d'accueil comporte au moins un plot de contact dont la configuration correspond à celle de la plage de contacts du composant introduit dans le logement, les plots de contacts étant connectés aux conducteurs d'une carte d'interface comprise dans chaque support d'accueil, la carte d'interface comportant des bornes reliées aux conducteurs de ladite carte d'un support d'accueil, de manière à permettre la personnalisation électrique des composants présents dans les logements d'un support d'accueil par les moyens informatiques.

Selon une autre particularité, le système de personnalisation est **caractérisé en ce que** chaque logement d'un support d'accueil comprend une ouverture dont les bords retiennent chaque composant présent dans chaque logement du support d'accueil, les moyens informatiques pilotant les moyens de déplacement du dispositif de personnalisation électrique de telle sorte que les bornes conductrices dudit dispositif de personnalisation électrique soient connectables aux plages de contacts de chaque composant présent dans le support d'accueil avec le dispositif de personnalisation électrique.

Selon une autre particularité, le système de personnalisation est **caractérisé en ce qu'il** comprend un poste de gravure disposé sur le trajet de chaque support d'accueil, comprenant au moins des moyens de gravure et/ou d'enlèvement de matière agencés pour être déplaçables en vis-à-vis d'au moins un support d'accueil, les moyens de gravure et/ou d'enlèvement de matière et l'agencement assurant le déplacement étant pilotés par les moyens informatiques.

Selon une autre particularité, le système de personnalisation est **caractérisé en ce que** le poste de gravure comprend un dispositif d'acquisition d'images piloté par les moyens informatiques, permettant de contrôler les gravures réalisées par les moyens de gravure et/ou d'enlèvement de matière, au moins une image des informations graphiques étant enregistrée dans une zone mémoire des moyens informatiques associée à l'identifiant du composant identifié par sa position, un algorithme mis en oeuvre par les moyens informatiques réalisant une comparaison entre les gravures acquises par les moyens d'acquisition d'images et les informations graphiques enregistrées pour la personnalisation du composant incorporant le même identifiant dans une zone mémoire des moyens informatiques.

Selon une autre particularité d'une variante, le système de personnalisation est **caractérisé en ce que** les moyens informatiques pilotent les moyens de déplacement rendus solidaires du dispositif de personnalisation électrique, de telle sorte que les bornes conductrices dudit dispositif de personnalisation électrique soient directement connectables aux plages de contacts des composants électroniques présents dans les logements d'un support d'accueil, de manière à permettre la personnalisation électrique desdits composants par les moyens informatiques, le poste de gravure étant disposé en vis-à-vis du poste de personnalisation électrique de l'autre côté du plateau tournant.

Selon une autre particularité, le système de personnalisation est **caractérisé en ce qu'il** comprend un plateau pousseur pilotés par les moyens informatiques et comprenant un agencement pour le déplacer dans une direction perpendiculaire au plateau tournant, de manière à maintenir les composants dans les logements prévus à cet effet au cours de la personnalisation desdits composants.

Selon une autre particularité, le système de personnalisation est **caractérisé en ce que** les moyens informatiques lisent les informations intégrées dans une zone mémoire des composants reliés au dispositif de personnalisation électrique et personnalisés, de manière à vérifier l'intégrité des données enregistrées dans une zone mémoire de chaque composant.

Selon une autre particularité, le système de personnalisation est **caractérisé en ce que** le plateau pousseur comprend au moins une ouverture pour permettre la réalisation des opérations de gravure des composants.

Selon une autre particularité, le système de personnalisation est **caractérisé en ce** qu'il comprend un système d'entrée et un système de sortie contrôlés indépendamment, lesdits systèmes comprenant chacun au moins un dispositif d'acquisition d'images piloté par les moyens informatiques, permettant de contrôler la présence ou non de composants dans les alvéoles des systèmes d'entrée et de sortie.

Selon une autre particularité, le système de personnalisation est **caractérisé en ce qu'**un utilisateur peut interagir avec les moyens informatiques via une interface homme/machine de manière à stopper le fonctionnement dudit système afin de vérifier les composants électroniques personnalisés et/ou à personnaliser et/ou en cours de personnalisation.

Selon une autre particularité, le système de personnalisation est **caractérisé en ce que**, les moyens d'acquisition d'images et/ou les moyens informatiques détectant au moins une erreur de personnalisation d'au moins un composant, les moyens de transport pilotés par les moyens informatiques saisissent au moins le composant défectueux, le transportent et le déposent dans le poste de rejet.

Selon une autre particularité, le système de personnalisation est **caractérisé en ce que** le poste de rejet comprend plusieurs bacs, chaque bac stockant des composants défectueux selon un type de panne détectée par les moyens d'acquisition d'images et/ou les moyens informatiques.

Selon une autre particularité, le système de personnalisation est **caractérisé en ce que** chaque support d'accueil comprend au moins un composant électronique de réserve, un certain nombre de composants de réserve étant personnalisés pour remplacer un certain nombre de composants défectueux détectés par les moyens informatiques, l'identifiant et l'ordre de positionnement sur le système de sortie de chaque composant défectueux étant associés par les moyens informatiques à la position d'un composant de réserve correspondant utilisé et personnalisé avec l'identifiant et les données du composant défectueux.

Selon une autre particularité, le système de personnalisation est **caractérisé en ce que** les moyens informatiques utilisent l'ordre de positionnement sur le système de sortie et l'identifiant de chaque composant personnalisé, enregistrés dans une zone mémoire des moyens informatiques, afin que les moyens de transport, pilotés par lesdits moyens informatiques, déposent chaque composant dans le système de sortie du système de personnalisation dans un ordre précis, l'ordre de dépôt des composants étant enregistré dans une zone mémoire des moyens informatiques.

Selon une autre particularité, le système de personnalisation est **caractérisé en ce que** les moyens de transport, pilotés par les moyens informatiques, déposent au moins un composant personnalisé dans la zone de stockage temporaire, avant de réintégrer lesdits composants dans le système de sortie du système de personnalisation selon un ordre enregistré dans une zone mémoire des moyens informatiques.

Selon une autre particularité, le système de personnalisation est **caractérisé en ce que** la zone de stockage temporaire a une fonction de système d'entrée et/ou de sortie et/ou de stockage temporaire de composants personnalisés.

Selon une autre particularité, le système de personnalisation est **caractérisé en ce que** la matrice de logements d'un support d'accueil comprend une ligne de logements comportant des moyens d'alignement des composants électroniques dans lesquels les composants sont déposés par les moyens de transports pilotés par les moyens informatiques, les composants une fois alignés étant saisis et déposés par les moyens de transport dans une autre ligne de la matrice de logements du même support d'accueil en prévision de la personnalisation des composants.

Un autre objectif de l'invention est de proposer un procédé de personnalisation de composants électroniques, mis en oeuvre par le système de personnalisation de composants électroniques. Le procédé comprend :
a) une étape de dépôt de composants électroniques à personnaliser dans les logements d'un support d'accueil tant qu'il y a au moins un logement vide, la matrice de logements étant remplie par étapes successives selon des directions parallèles,
b) une étape de mise en mouvement du plateau tournant mis en oeuvre par les moyens de déplacement du plateau tournant pilotés par les moyens informatiques, de telle sorte que le support d'accueil comprenant les composants soit placé en vis-à-vis du dispositif de personnalisation électrique,
c) une étape de mise en place du dispositif de personnalisation électrique par les moyens informatiques de telle sorte que les bornes conductrices dudit dispositif soient connectées aux plages de contacts des composants présents dans les logements du support d'accueil,
d) une étape de personnalisation au moins électrique des composant(s) mise en oeuvre par les moyens informatiques, au moins un programme et/ou au moins une donnée étant intégrée dans une zone mémoire de chaque composant électronique connecté au dispositif de personnalisation au moins électrique,
e) une étape de déplacement du dispositif de personnalisation au moins électrique, mis en oeuvre par les moyens informatiques pilotant les moyens de déplacement dudit dispositif, ce dernier s'éloignant du support d'accueil comprenant les composants personnalisés électriquement,
f) une étape de mise en mouvement du plateau tournant mis en oeuvre par les moyens de déplacement du plateau tournant pilotés par les moyens informatiques, de telle sorte que les moyens de transport puissent accéder à la matrice de logements du support d'accueil comprenant les composant(s) personnalisés,
g) une étape de déchargement des composants personnalisés de chaque support d'accueil par les moyens de transports pilotés par les moyens informatiques opérant en plusieurs étapes successives selon des directions parallèles par rapport à la ligne ou la colonne de matrice,
h) une étape de répétition des étapes précédentes pour tous les supports d'accueil solidaires du plateau tournant.

Selon une autre particularité, l'étape a) de dépôt de composants électroniques dans les logements d'un support d'accueil comprend les étapes suivantes :
a) une étape de déplacement du plateau tournant mis en oeuvre par les moyens de déplacement commandés par les moyens informatiques, suivi de l'arrêt du mouvement de plateau tournant lorsque les coordonnées de la position d'un support d'accueil, suivie par les moyens informatiques, correspondent aux coordonnées d'une zone de chargement/déchargement de composants enregistrées dans une zone mémoire des moyens informatiques de façon que les moyens de transport, pilotés par les moyens informatiques, puissent accéder à la matrice de logements du support d'accueil,
b) une étape de saisie d'une pluralité de composants électroniques par les moyens de transport, pilotés par les moyens informatiques, depuis le système d'entrée comprenant des composants non personnalisés,
c) une étape de dépôt simultané de chaque composant saisi par les moyens de transport dans un logement respectif du support d'accueil, chaque logement comprenant un seul composant, les logements remplis à cette étape appartenant à une même direction de la matrice,
d) une étape de répétition des étapes b) et c) tant qu'il y a au moins un logement vide, la matrice de logements étant remplie par étapes successives selon des directions parallèles.

Selon une autre particularité, l'étape g) de déchargement de composants électroniques comprend les étapes suivantes :
a) une étape de saisie par les moyens de transport, pilotés par les moyens informatiques, des composants personnalisés présents selon une direction de la matrice de logements du support d'accueil,
b) une étape de dépôt des composants personnalisés saisis par les moyens de transport vers le système de sortie destiné à récupérer un groupe de composants personnalisés alignés,
c) une étape de répétition des étapes a) et b), de manière à vider les logements des composants personnalisés, la matrice de logements étant vidée par étapes successives selon des directions parallèles.

Selon une autre particularité, le procédé de personnalisation est **caractérisé en ce que** les étapes a) et g) de dépôt et de déchargement de composants électroniques sont successivement réalisées pour chaque direction d'une matrice de logements d'un support d'accueil, de façon que chaque direction de la matrice de logements soit tour à tour vidée de composants personnalisés par les moyens de transport pilotés par les moyens informatiques, puis remplie de composants vierges provenant du système d'entrée par les moyens de transport pilotés par les moyens informatiques.

Selon une autre particularité, le procédé de personnalisation est **caractérisé en ce qu'il** comprend une étape d'attribution par les moyens informatiques d'un identifiant et d'un ordre de positionnement sur le système de sortie à chaque composant électronique personnalisé, ledit identifiant, l'ordre de positionnement et les coordonnées de la position de chaque composant dans un logement étant enregistrés dans un espace mémoire des moyens informatiques, de telle sorte que les composants personnalisés soient déposés par les moyens de transport dans le système de sortie à l'étape k) dans un ordre précis.

Selon une autre particularité, le procédé de personnalisation est **caractérisé en ce** qu'il comprend une étape de personnalisation graphique réalisée par des moyens de gravure, compris dans un poste de gravure et pilotés par les moyens informatiques.

Selon une autre particularité, le procédé de personnalisation est **caractérisé en ce que** les étapes de personnalisation électrique et graphique des composants présents dans un même support d'accueil sont réalisées en même temps.

Selon une autre particularité, le procédé de personnalisation est **caractérisé en** ce qu'il comprend une étape de vérification des informations de personnalisation électriques et/ou graphique, réalisée par les moyens d'acquisition d'images et/ou les moyens informatiques.

Selon une autre particularité, le procédé de personnalisation est **caractérisé en ce qu'il** comprend une étape de vérification des composants électroniques personnalisés et/ou à personnaliser et/ou en cours de personnalisation réalisée par un utilisateur, l'utilisateur pouvant interagir avec les moyens informatiques via une interface homme/machine de manière à stopper le fonctionnement du système de personnalisation.

Selon une autre particularité, le procédé de personnalisation est **caractérisé en ce qu'il** comprend à la suite de l'étape d) de personnalisation, une étape de vérification par les moyens d'acquisition d'images et/ou les moyens informatiques pour détecter des erreurs de personnalisation, le nombre de composants défectueux n'excédant pas le nombre de composants de réserve présents dans la matrice de logements du support d'accueil, l'étape de vérification étant au moins suivie par :
e) une étape de lecture de l'identifiant et/ou des coordonnées mémorisées correspondant aux composants détectés comme défectueux par les moyens d'acquisition d'images et/ou les moyens informatiques,
f) une étape de personnalisation de composants de réserve présents dans la matrice de logements, par le dispositif de personnalisation électrique et/ou le poste de gravure piloté(s) par les moyens informatiques, chaque composant de réserve recevant les informations de personnalisation initialement prévue pour chaque composant défectueux,
g) une étape de déplacement du poste de gravure et/ou du dispositif de personnalisation électrique, mis en oeuvre par les moyens informatiques pilotant les moyens de déplacement desdits poste et dispositif, ces derniers s'éloignant du support d'accueil comprenant les composants personnalisés,
h) une étape de mise en mouvement du plateau tournant mis en oeuvre par les moyens de déplacement du plateau tournant pilotés par les moyens informatiques, suivi de l'arrêt du mouvement du plateau tournant lorsque les coordonnées de la position d'un support d'accueil, suivie par les moyens informatiques, correspondent aux coordonnées de la zone de chargement/déchargement de composants enregistrées dans une zone mémoire des moyens informatiques de façon que les moyens de transport, pilotés par les moyens informatiques, puissent accéder à la matrice de logements du support d'accueil,
i) une étape de saisie par les moyens de transport, pilotés par les moyens informatiques, des composants personnalisés présents dans une direction de la matrice de logements du support d'accueil,
j) une étape de déplacement des moyens de transport vers le poste de rejet, suivi du rejet du/des composants défectueux parmi les composants saisis par les moyens de transport,
k) une étape de déplacement des moyens de transport vers le système de sortie, suivi du dépôt des composants personnalisés dans les alvéoles du système de sortie, chaque alvéole ayant du recevoir un composant défectueux faisant l'objet d'un remplissage spécifique,
1) une étape de déplacement des moyens de transport vers l'emplacement d'au moins un composant de réserve présent dans la matrice de logements du support d'accueil, suivi de la saisie du/des composants de réserve personnalisés et remplaçant les composants défectueux, chaque composant de réserve remplaçant un composant défectueux, cette étape 1) pouvant s'exécuter indifféremment avant ou après l'étape k),
m) une étape de déplacement des moyens de transport vers le système de sortie, suivi du dépôt des composants de réserve personnalisés dans les alvéoles faisant l'objet d'un remplissage spécifique, de manière à ce que l'ordre de positionnement des composants personnalisés soit respecté,
n) une étape de répétition des étapes i à m pour chaque direction de la matrice de logements du support d'accueil,
o) étape de répétition des étapes précédentes, pour tous les supports d'accueil solidaires du plateau tournant.

Selon une autre particularité, le procédé de personnalisation est **caractérisé en ce que**, lorsqu'il y a plus de composants défectueux que de composants de réserve dans la matrice de logements d'un support d'accueil, le procédé comprend à la suite de l'étape de vérification :
e) une étape de lecture de l'identifiant et/ou des coordonnées mémorisées correspondant aux composants détectés comme défectueux dans un premier support d'accueil par les moyens d'acquisition d'images et/ou les moyens informatiques,
f) une étape de personnalisation des composants de réserve présents dans la matrice de logements, par le dispositif de personnalisation électrique et/ou le poste de gravure piloté(s) par les moyens informatiques, une partie des composants défectueux du premier support d'accueil n'étant pas remplacée faute d'un nombre suffisant de composants de réserve dans le premier support d'accueil,
g) étape de déplacement du poste de gravure et/ou du dispositif de personnalisation électrique, mis en oeuvre par les moyens informatiques pilotant les moyens de déplacement desdits poste et dispositif, ces derniers s'éloignant du premier support d'accueil comprenant les composants personnalisés
h) une étape de mise en mouvement du plateau tournant mis en oeuvre par les moyens de déplacement du plateau tournant pilotés par les moyens informatiques, suivi de l'arrêt du mouvement du plateau tournant lorsque les coordonnées de la position du premier support d'accueil, suivie par les moyens informatiques, correspondent aux coordonnées de la zone de chargement/déchargement de composants enregistrées dans une zone mémoire des moyens informatiques de façon que les moyens de transport, pilotés par les moyens informatiques, puissent accéder à la matrice de logements du support d'accueil
i) une étape de chargement des composants personnalisés et des composants de réserve personnalisés du premier support d'accueil dans les alvéoles du système de sortie, par les moyens de transports pilotés par les moyens informatiques opérant en plusieurs étapes successives selon des directions parallèles par rapport à la ligne ou la colonne de matrice, de manière à ce que l'ordre de positionnement des composants personnalisés soit respecté dans le système de sortie, les composants détectés comme défectueux étant à chaque étape transportés et jetés par les moyens de transport dans au moins un bac du poste de rejet, les composants personnalisés du premier support d'accueil ordonnés selon un positionnement postérieur au premier composant défectueux, n'ayant pu être remplacés par un composant de réserve du premier support d'accueil, étant chargés par étapes successives dans des directions parallèles dans les alvéoles de la zone de stockage temporaire,
j) une étape de chargement du premier support d'accueil en composants provenant du système d'entrée, par les moyens de transports pilotés par les moyens informatiques opérant en plusieurs étapes successives selon des directions parallèles par rapport à la ligne ou la colonne de matrice,
k) une étape de mise en mouvement du plateau tournant mis en oeuvre par les moyens de déplacement du plateau tournant pilotés par les moyens informatiques, suivi de l'arrêt du mouvement du plateau tournant lorsque les coordonnées de la position d'un second support d'accueil, suivie par les moyens informatiques, correspondent aux coordonnées du poste de gravure et/ou du dispositif de personnalisation électrique enregistrées dans une zone mémoire des moyens informatiques, de façon que lesdits postes puissent accéder à la matrice de logements du second support d'accueil,
l) une étape de personnalisation par les moyens informatiques des composants du second support d'accueil, un certain nombre de composants recevant les informations de personnalisation initialement prévue pour chaque composant défectueux, n'ayant pas pu être remplacé, du premier support d'accueil,
m) une étape de déplacement du poste de gravure et/ou du dispositif de personnalisation électrique, mis en oeuvre par les moyens informatiques pilotant les moyens de déplacement desdits poste et dispositif, ces derniers s'éloignant du second support d'accueil comprenant les composants personnalisés,
n) une étape de mise en mouvement du plateau tournant mis en oeuvre par les moyens de déplacement du plateau tournant pilotés par les moyens informatiques, suivi de l'arrêt du mouvement du plateau tournant lorsque les coordonnées de la position du second support d'accueil, suivie par les moyens informatiques, correspondent aux coordonnées de la zone de chargement/déchargement de composants enregistrées dans une zone mémoire des moyens informatiques de façon que les moyens de transport, pilotés par les moyens informatiques, puissent accéder à la matrice de logements du second support d'accueil,
o) une étape de chargement par les moyens de transports des composants personnalisés du second support d'accueil, ayant reçu les informations de personnalisation initialement prévue pour chaque composant défectueux n'ayant pas pu être remplacé du premier support d'accueil, dans les alvéoles faisant l'objet d'un remplissage spécifique du système de sortie, de manière à ce que l'ordre de positionnement des composants personnalisés soit respecté,
p) une étape de déplacement des composants et composants de réserve personnalisés dans le premier support d'accueil, le déplacement étant réalisé par les moyens de transport par étapes successives selon des directions parallèles, depuis la zone de stockage temporaire vers le système de sortie de manière à ce que l'ordre de positionnement des composants personnalisés soit respecté,
q) une étape de chargement des composants personnalisés restants du second support d'accueil vers la zone de sortie, par étapes successives dans des directions parallèles, de manière à ce que l'ordre de positionnement des composants personnalisés soit respecté.

L'invention, avec ses caractéristiques et avantages, ressortira plus clairement à la lecture de la description faite en référence aux dessins annexés dans lesquels :
La figure 1 illustre le système de personnalisation de composants dans un mode de réalisation.
La figure 2 illustre le système de personnalisation de composants dans un autre mode de réalisation.
La figure 3a illustre un support d'accueil dans un mode de réalisation, vu de dessus.
La figure 3b illustre un support d'accueil et un dispositif de personnalisation électrique avec contact dans un mode de réalisation, vus en coupe longitudinale.
La figure 4a illustre un support d'accueil dans un autre mode de réalisation, vu de dessus.
La figure 4b illustre un support d'accueil et un dispositif de personnalisation électrique avec contact dans un second mode de réalisation, vus en coupe longitudinale.
La figure 5 illustre schématiquement le remplacement de composants défectueux par des composants de réserve dans un mode de réalisation.

### DESCRIPTION DES MODES DE REALISATION PREFERES DE L'INVENTION

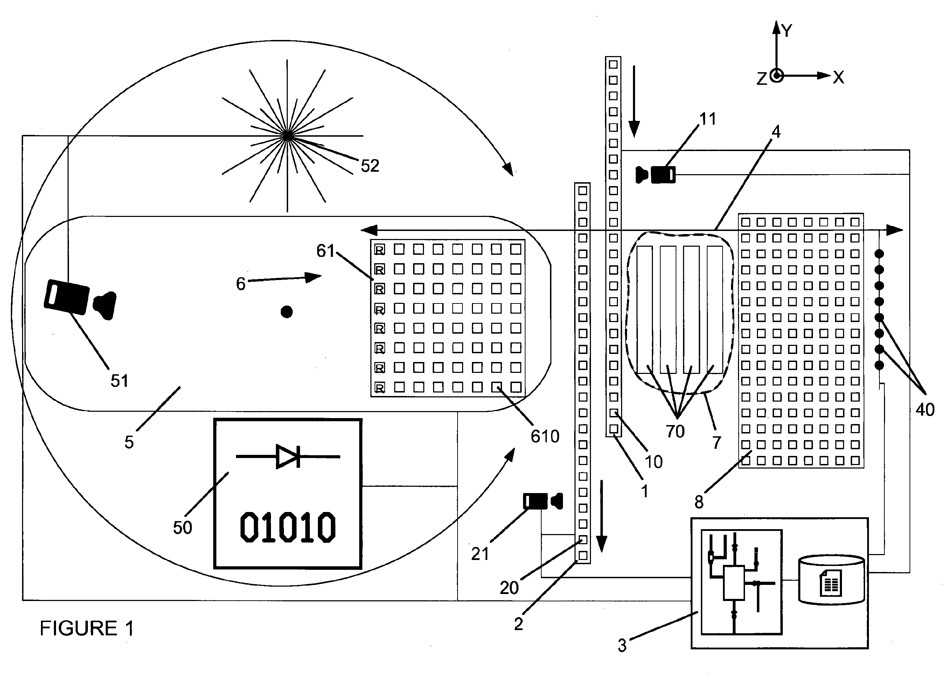

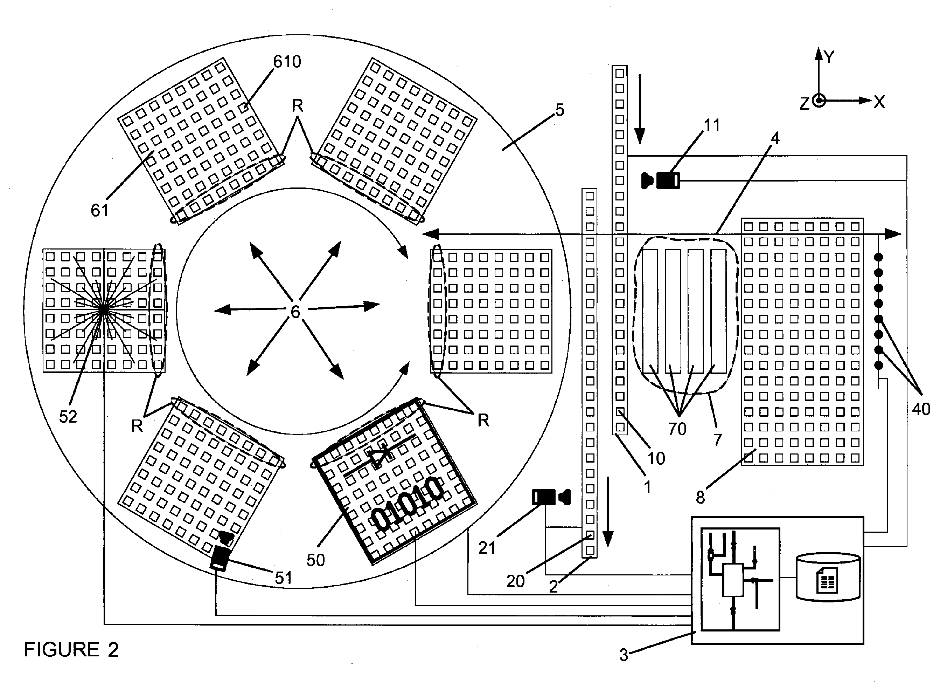

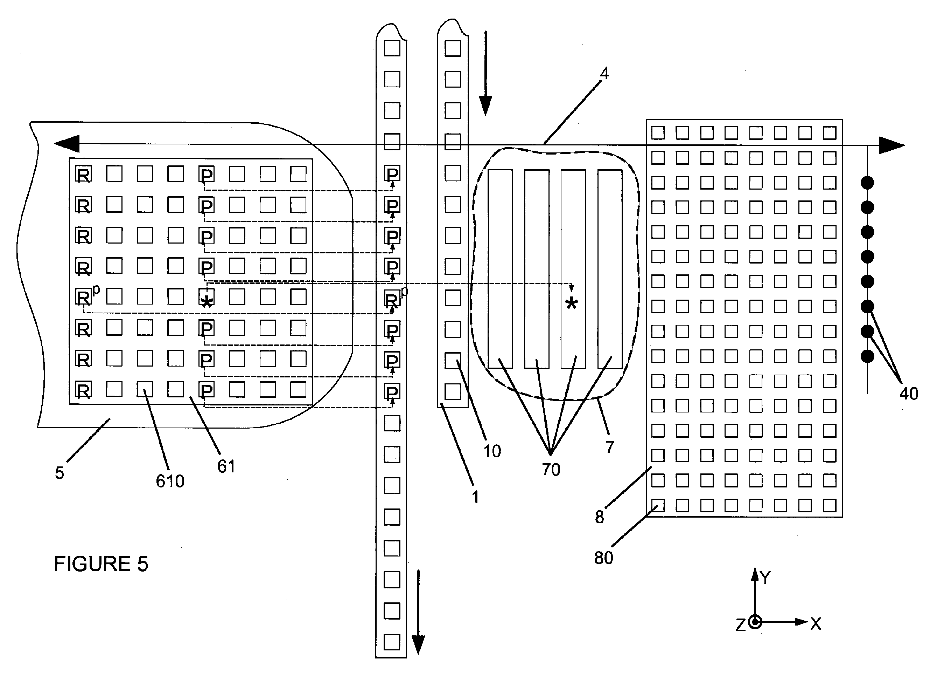

En référence aux figures 1 à 5, le système de personnalisation de composants électroniques va maintenant être décrit.

On entend par composant électronique tout composant comprenant un corps généralement en matériau synthétique classique, par exemple et de façon non limitative en ABS (Acrylonitrile Butadiène Styrène) ou en PVC (Polychlorure de Vinyle) ou en résine époxy. Selon une variante, le corps du composant peut-être en matériau biodégradable. Le composant comprend des moyens électroniques, lesdits moyens comprenant par exemple un premier module portant sur une face des plages de contacts électriques, reliées électriquement à un second module comprenant une puce électronique. La puce électronique comprend, par exemple et de façon non limitative, au moins un microcircuit comme par exemple un microprocesseur ou un microcontrôleur, et au moins un espace mémoire pouvant être intégré dans le microcircuit. Par exemple et de façon non limitative, certains composants électroniques comportent au moins un microcircuit communiquant sans contact avec un agencement comprenant par exemple au moins une antenne radiofréquence. Les composants électroniques peuvent également comprendre par exemple au moins deux microcircuits, le premier étant relié électriquement à des plages de contact, le second étant un module communiquant sans contact avec un agencement comportant au moins une antenne radiofréquence, le second microcircuit pouvant être relié électriquement au premier. Les microcircuits de ces composants électroniques, comportant au moins un microcircuit relié à des plages de contact et au moins un microcircuit sans contact, peuvent être personnalisés électriquement simultanément ou séquentiellement, selon les caractéristiques techniques des composants.

Dans un mode de réalisation, le système de personnalisation comprend des moyens informatiques (3). Ces moyens informatiques comprennent, par exemple et de façon non limitative, au moins un espace mémoire, des moyens d'acquisition, de traitement et d'enregistrement de données dans ledit espace mémoire.

Dans un mode de réalisation, le système de personnalisation comprend au moins un plateau tournant (5) dans un plan (x, y), solidaire de moyens de déplacement circulaires pilotés par les moyens informatiques (3). Le plateau tournant (5) comprend au moins un support d'accueil (6) de composants électroniques (6) destiné à recevoir les composants électroniques à personnaliser, ledit support d'accueil (6) étant rendu solidaire du plateau tournant (5) par le biais d'un plateau d'accueil (62). Chaque support d'accueil (6) comprend une pluralité de logements (610) destinés à recevoir chacun un composant déposé depuis un système d'entrée (1) par des moyens de transport (4) pour être personnalisés. Dans un mode de réalisation, les logements (610) du support d'accueil (6) sont disposés selon une matrice de n lignes et de m colonnes, n et m étant supérieurs ou égal à 1. Par exemple et de façon non limitative, le nombre de lignes est le même que le nombre de colonnes. Chaque support d'accueil est inséré dans une niche usinée dans le plateau tournant (5), chaque niche comportant une ouverture dont les bords retiennent le support d'accueil (6). A tout moment, les moyens informatiques (3) reçoivent les coordonnées de la position de chaque support d'accueil (6), lesdites coordonnées étant enregistrées dans une zone mémoire des moyens informatiques (3), ces derniers assurant ainsi le suivi des supports d'accueil (6) solidaires du plateau tournant (5).

Dans un mode de réalisation, les composants électroniques personnalisés par le système de personnalisation selon l'invention sont conditionnés dans un système d'approvisionnement (1, 2) compris dans le système de personnalisation, ledit système ayant la forme d'une bobine comprenant une pluralité d'alvéoles (10, 20) dans lesquelles sont stockés les composants électroniques à personnaliser. Ce système d'approvisionnement joue aussi bien le rôle de système d'entrée (1) que de système de sortie (2). Dans un mode de réalisation préférentiel, le système de personnalisation de composants électroniques comprend un système d'entrée (1) et un système de sortie (2) indépendant du système d'entrée (1) dans lesquels les composants personnalisés sont stockés dans des alvéoles (10, 20) et conditionnés en bobine. Les systèmes d'entrée/sortie (1, 2) sont disposés tangentiellement au plateau tournant selon une direction y dans un repère orthonormé (x, y, z). Dans un mode de réalisation, les systèmes d'entrée et de sortie (1, 2) comprennent chacun au moins un dispositif d'acquisition d'images (11, 21) piloté par des moyens informatiques (3), par exemple une caméra, permettant de contrôler la présence ou non de composants dans les alvéoles (10, 20) des systèmes d'entrée (1) et de sortie (2).

Le système de personnalisation comprend également des moyens de transport (4). Les moyens informatiques (3) positionnent et déplacent les moyens de transport (4), et commandent la saisie des composants électroniques par exemple depuis le système d'entrée (1). Les composants électroniques sont alignés dans le système d'entrée (1) selon la direction y. Ces moyens de transport (4) comprennent au moins un bras mobile piloté par les moyens informatiques. Dans un mode de réalisation, le bras est mobile suivant deux directions x et z dans le repère orthonormé (x, y, z). Par exemple et de façon non limitative, le bras comporte sur son extrémité saisissant les composants une pluralité de ventouses aspirantes (40) reliées à un système d'aspiration comportant des vannes commandées par les moyens informatiques (3). Ces ventouses sont alignées dans une direction suivant y dans le repère orthonormé (x, y, z). Par exemple et de façon non limitative, les moyens de transports (4) ne peuvent saisir les composants présents dans un support d'accueil (6) que lorsque ce dernier est mis en place suite à la rotation commandée par les moyens informatiques (3) du plateau tournant (5), de telle sorte que les moyens de transport accèdent d'une part à l'ensemble des logements (610) du support d'accueil, et d'autre part que les n lignes de la matrice de logements soient dans une direction suivant y du repère orthonormé (x, y, z). Dans un mode de réalisation, l'aspiration de chaque ventouse est commandée indépendamment des autres ventouses, de telle sorte que le nombre de composants pouvant être saisis simultanément est compris entre 1 et le nombre de ventouses (40) présentes sur l'extrémité du bras. Dans un mode de réalisation préférentiel, le nombre de ventouses équivaut au nombre de colonnes présentes dans un support d'accueil (6), tous les supports d'accueil (6) présents sut le plateau tournant (5) étant identiques.

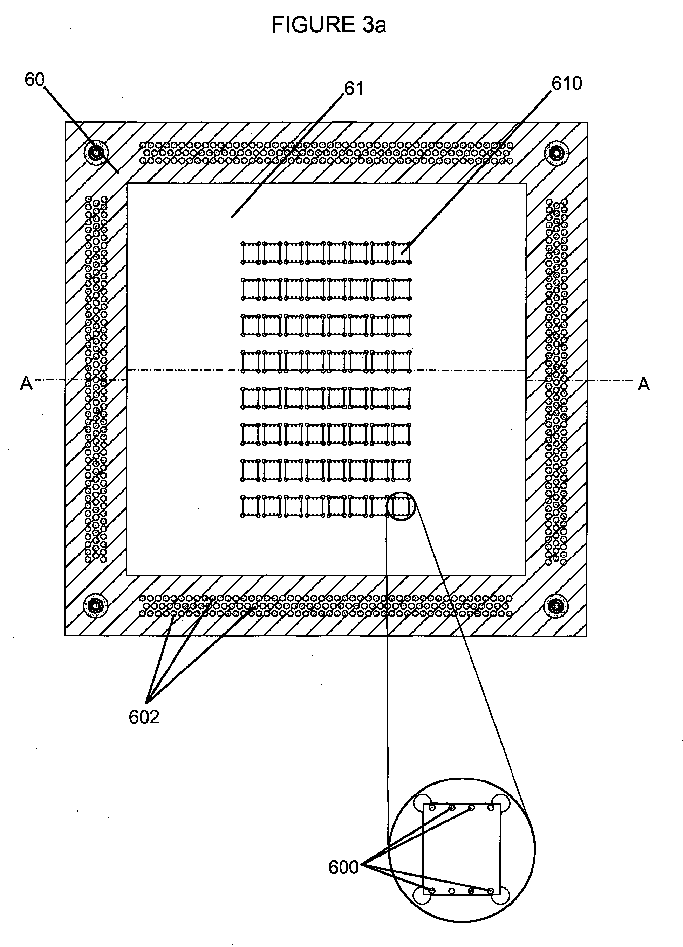

Dans un mode de réalisation, en référence à la figure 3a, chaque logement (610) d'un support d'accueil (6) comporte au moins un plot de contact (600), destiné à être mis au contact de la plage de contacts du composant présent dans le logement (610). Par exemple et de façon non limitative, chaque support d'accueil comprend une pluralité de logements, chaque logement (610) comportant une pluralité de plots de contact (600) dont la configuration correspond à la configuration de la plage de contacts d'un certain type de composant électronique. Le support d'accueil (6) comprend également une carte d'interface (60), comprenant au moins un conducteur (601) interconnecté à un plot de contact (600) présent dans un logement du support d'accueil. Par exemple et de façon non limitative, la carte comprend une pluralité de ces conducteurs (601), qui se prolongent le long de la carte d'interface (60) et sont électriquement reliées à une pluralité de bornes (602) présentes sur les bords de ladite carte d'interface (60).

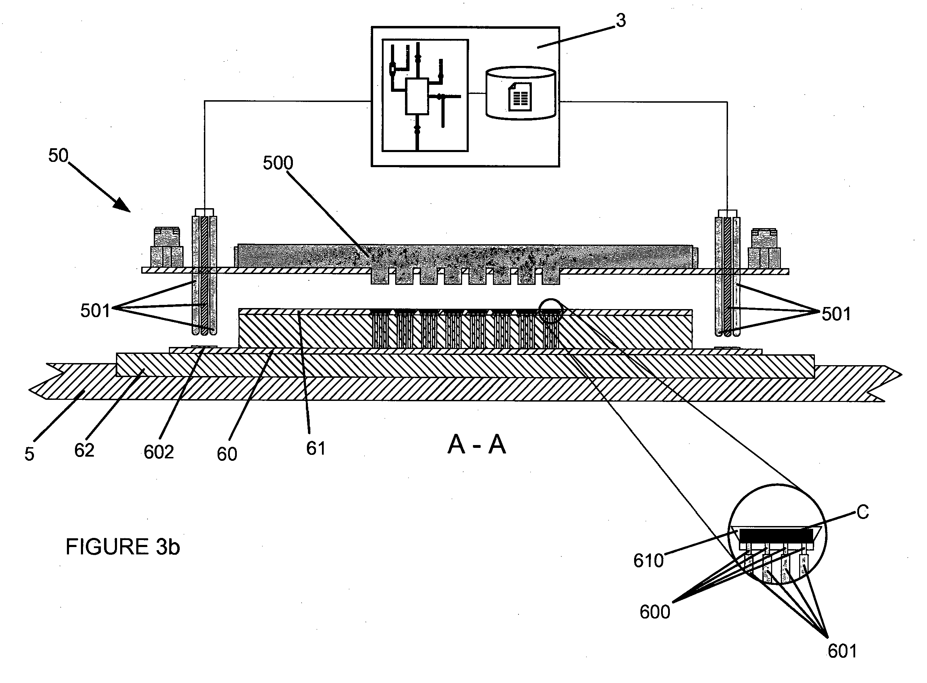

Dans un mode de réalisation, en référence à la figure 3b, le système de personnalisation de composants comprend un dispositif de personnalisation électrique (50) des composants. Ce dispositif comprend des bornes conductrices (501) destinées à être reliées électriquement aux bornes (602) de la carte d'interface (60), lorsque le plateau est immobile en rotation. Le dispositif de personnalisation électrique (50) comprend également des moyens de déplacement pilotés par les moyens informatiques (3), de manière à ce que les bornes conductrices (501) du dispositif de personnalisation électrique soient connectables à la plage de contacts de chaque composant électronique situé dans le logement (610) prévu à cet effet. Ces moyens de déplacement permettent le déplacement du dispositif de personnalisation électrique dans une direction z dans le repère orthonormé (x, y, z), le plateau tournant (5) et les supports d'accueil (6) étant dans des plans parallèles au plan (x, y).

Les moyens informatiques (3), par le biais de ce dispositif de personnalisation électrique (50), chargent des données et/ou des programmes dans la zone mémoire de la puce électronique de chaque composant. Dans un mode de réalisation, un agencement compris dans les moyens informatiques (3) associent à chaque composant un identifiant unique, permettant de reconnaitre sa position sur chaque support d'accueil (6) et son ordre de sortie sur le système de sortie (2). Ces données sont enregistrées dans une zone mémoire des moyens informatiques (3). Cette opération permet d'individualiser chaque composant, ce qui se révélera utile lors d'opération de contrôle qualité, comme cela sera décrit plus loin dans la description. Cela se révèle également particulièrement utile pour stocker dans le système de sortie (2) les composants dans un ordre précis, l'ordre de dépôt des composants étant enregistré dans une zone mémoire des moyens informatiques (3).

Dans un mode de réalisation, le dispositif de personnalisation comprend un plateau pousseur (500), entrant en contact de la face opposée aux plages de contacts des composants, et dont la fonction est de maintenir le contact réalisé entre les plages de contacts des composants et les plots de contact (600) présents dans les logements (610) d'un support d'accueil (6). Le plateau pousseur (500) comprend un agencement piloté par les moyens informatique (3) pour le déplacer dans une direction perpendiculaire au plateau tournant (5), de manière à maintenir les composants dans les logements prévus à cet effet au cours de la personnalisation des composants. Dans une variante, ce plateau pousseur (500) comprend au moins une ouverture (502) dont la taille est inférieure à celle des composants, de manière à permettre l'accès à la face opposée aux plages de contacts des composants, dans le cadre de la réalisation d'opérations ultérieures optionnelles sur ladite face.

Dans un mode de réalisation, le système de personnalisation comprend un poste de gravure (52), comprenant au moins des moyens de gravure et/ou d'enlèvement de matière, par exemple et de façon non limitative un laser de gravure, agencés pour être déplaçables en vis-à-vis d'au moins un support d'accueil (6). Par soucis de clarté, nous emploierons dans la suite de la rédaction le terme « laser » pour définir les moyens de gravure et/ou d'enlèvement de matière. Dans un mode de réalisation, le laser est rendu solidaire de moyens de déplacement, pilotés par les moyens informatiques (3). Le poste de gravure (52) permet de personnaliser graphiquement chaque composant. Au moins un modèle graphique est enregistré dans une zone mémoire des moyens informatiques (3). En prévision de la personnalisation graphique, les moyens informatiques (3) associent un modèle à l'identifiant et aux coordonnées d'au moins un composant à personnaliser, présent dans les logements (610) d'un support d'accueil. Ces informations sont utilisées par les moyens informatiques (3) pour d'une part piloter les moyens de déplacement permettant de positionner correctement le laser, et d'autre part pour actionner le laser.

Dans un mode de réalisation, le poste de gravure (52) comprend un dispositif d'acquisition d'images (51) piloté par les moyens informatiques, par exemple et de façon non limitative une caméra, permettant de contrôler les gravures réalisées par le laser. Pour ce faire, les moyens informatiques (3) enregistrent dans une zone mémoire une image acquise par la caméra (51) de la gravure réalisée par le laser, et comparent cette image avec le modèle enregistré dans une zone mémoire des moyens informatiques (3). Si les différences calculées par les moyens informatiques (3) dépassent un seuil dont les caractéristiques sont enregistrées dans une zone mémoire des moyens informatiques, alors ces derniers rejettent le composant. Les composants défectueux (*) sont stockés dans un poste de rejet (7), ledit poste comprenant au moins un bac (70).

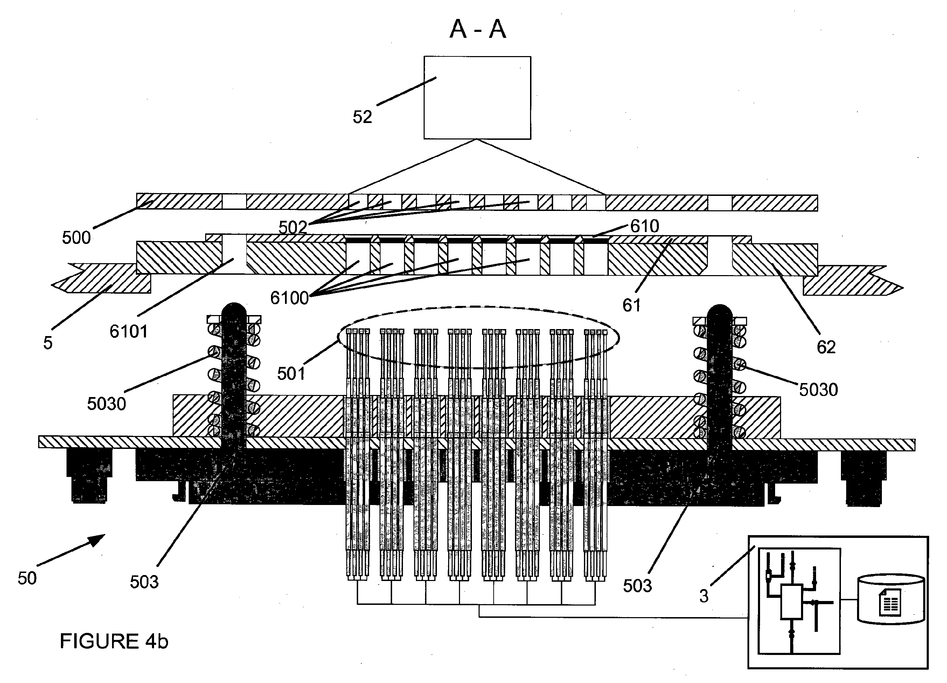

Dans un mode de réalisation alternatif, les logements (610) de chaque support d'accueil (6) ne comprennent pas de plots de contact (600). Au contraire, chaque logement comprend une ouverture (6100) dont les bords retiennent le composant présent dans ledit logement (610). Ainsi, les plages de contacts des composants présents dans les logements selon ce mode de réalisation sont accessibles aux bornes conductrices (501) du dispositif de personnalisation (50) selon un mode de réalisation alternatif, en référence à la figure 4b. D'autre part, les ouvertures des niches usinées dans le plateau tournant sont suffisamment larges pour permettre aux bornes conductrices (501) du dispositif de personnalisation électrique (50) d'être directement connectables aux plages de contacts des composants présents dans les logements (610) d'au moins un support d'accueil (6). Dans ce mode de réalisation, le dispositif de personnalisation électrique (50) comprend au moins un groupe de bornes conductrices (501) destinées à être insérées dans un logement, de manière à ce que ces bornes conductrices d'un groupe soient directement mises au contact de la plage de contacts d'un composant électronique présent dans un logement (610) du support d'accueil. Par exemple et de façon non limitative, il y a autant de groupes de bornes (501) que de logements (610) dans un support d'accueil (6), et chaque groupe comprend un nombre identique de bornes conductrices (501), dont la configuration est complémentaire de la configuration des plages de contacts des composants, permettant une connexion électrique directe sur les plages de contacts des composants présents dans les logements (610). Dans ce mode de réalisation, le poste de gravure (52) est positionné en vis-à-vis du dispositif de personnalisation électrique (50) de l'autre côté du plateau tournant (5).

Le dispositif de personnalisation électrique (50) dans ce mode de réalisation alternatif comprend également une pluralité de tiges verticales (503), par exemple et de façon non limitative situées aux quatre coins du support d'accueil. Ces tiges sont des guides s'insérant dans des trous correspondants (6101), usinés dans le support d'accueil (6) et le plateau pousseur (500) selon un mode de réalisation alternatif, comme cela est représenté à la figure 4b. Les trous usinés (6101) dans le support d'accueil (6) sont évasés à l'extrémité directement en regard des tiges (503), de manière à faciliter leur insertion, le diamètre de chaque trou étant juste supérieur au diamètre de chaque tige en regard du trou. Ces tiges-guides (503) permettent ainsi de parfaitement aligner le dispositif de personnalisation électrique (50) avec le support d'accueil (6), de telle sorte que chaque borne conductrice (501) du dispositif de personnalisation électrique soit en regard de chaque plage de contacts correspondante des composants électroniques à personnaliser. Dans un mode de réalisation, des moyens de déformation (5030), par exemple un ressort, sont disposés autour de chaque tige (503).

Dans un mode de réalisation, le système de personnalisation comprend un dispositif de personnalisation électrique sans contact. Ce dispositif, pouvant être rendu solidaire de moyens de déplacement dans une direction perpendiculaire au plateau (5), pilotés par les moyens informatiques (3), comporte une pluralité d'antennes radiofréquence, chaque antenne du dispositif de personnalisation sans contact étant connectable sans contact à un microcircuit des composants électroniques présents dans les logements (610) d'un support d'accueil (6). Dans un mode de réalisation alternatif, chaque support d'accueil (6) comprend dans chaque logement de la matrice de logements (610) une antenne radiofréquence, chaque antenne pouvant communiquer d'une part avec le composant sans contact introduit dans le logement (610) correspondant, et d'autre part avec le dispositif de personnalisation électrique (50) sans contact de telle sorte que les informations de personnalisation soit envoyées depuis le dispositif de personnalisation électrique (50) sans contact vers les composants à personnaliser, via les antennes radiofréquence intégrées dans chaque logement (610) du support d'accueil (6). Les moyens informatiques commandent et contrôles l'ensemble des étapes permettant la personnalisation électrique sans contact des composants.

Dans un mode de réalisation, lorsque les composants à personnaliser comprennent au moins un microcircuit communiquant sans contact avec un agencement comportant au moins une antenne radiofréquence, le système de personnalisation comprend au moins un dispositif de personnalisation électrique (50) sans contact.

Dans un mode de réalisation, lorsque les composants à personnaliser comprennent au moins deux microcircuits, - le premier étant relié électriquement à des plages de contact du composant, le second étant un module communiquant sans contact avec un agencement comportant au moins une antenne radiofréquence, le second microcircuit pouvant être relié électriquement au premier - le système de personnalisation comprend au moins un dispositif de personnalisation électrique avec contact et un dispositif de personnalisation électrique sans contact. Par exemple et de façon non limitative, les dispositifs de personnalisation électrique avec et sans contacts sont disposés en vis-à-vis d'un même support d'accueil (6) de part et d'autre du plateau tournant (5), personnalisant des composants électroniques d'un même support d'accueil (6). Dans ce mode de réalisation, les microcircuits avec et sans contacts des composants peuvent être personnalisés simultanément ou séquentiellement, suivant les caractéristiques techniques desdits composants. Dans une variante, les dispositifs de personnalisation électrique avec et sans contacts sont disposés en vis-à-vis de deux supports d'accueil (6) différents, personnalisant séquentiellement les composants électroniques de deux supports d'accueil (6) différents.

Dans un mode de réalisation, la personnalisation électrique des composants est accompagnée de la vérification de l'intégrité des données intégrées dans la puce de chaque composant. Pour cela, les moyens informatiques (3) lisent les informations intégrées dans la puce de chaque composant ayant subi une personnalisation électrique. Si la lecture de données enregistrées dans la puce d'un composant est possible d'une part, et si les données lues sont conformes, les moyens informatiques (3) réalisant une comparaison des données lues avec celles enregistrées dans une zone mémoire desdits moyens informatiques (3), ceux-ci considèrent que la personnalisation électrique du composant est réussie. En revanche, si aucune lecture n'est possible, ou le cas échéant si les données lues par les moyens informatiques (3) sont différentes des données enregistrées dans une zone mémoire des moyens informatiques (3), ce composant est jugé défectueux (*) par les moyens informatiques. Les moyens informatiques (3) envoient donc une information aux moyens de transport (4), cette information contenant l'identifiant et les coordonnées de chaque composant défectueux (*). Les composants défectueux (*) sont stockés dans le poste de rejet (7). Par exemple et de façon non limitative, le poste de rejet (7) comprend une pluralité de bacs (70), chaque bac stockant des composants défectueux (*) selon un type de panne détectée par les moyens informatiques (3). Le système de personnalisation de composants comprend également une zone matricielle (8) comportant une pluralité d'alvéoles (80) pour le stockage temporaire de composants, dans le cas où par exemple et de façon non limitative de nombreux composants sont identifiés comme défectueux (*) par les moyens informatiques (3). Par exemple, la zone de stockage temporaire comprend des moyens de déplacement, pilotés par les moyens informatiques (3), permettant le déplacement de la zone de stockage temporaire dans une direction suivant y dans le repère orthonormé (x, y, z). Cette zone de stockage temporaire (8) peut également servir, par exemple, de système de sortie pour les composants personnalisés (P). Cette zone de stockage temporaire (8) et son utilisation seront détaillées plus loin dans la description. Dans un mode de réalisation, le plateau tournant (5) d'une part et le poste de rejet (7) et la zone de stockage temporaire (8) d'autre part sont positionnés de part et d'autre des systèmes d'entrée/sortie (1, 2).

Dans un mode de réalisation alternatif, le poste de rejet (7) et la zone de stockage temporaire (8) d'une part et les systèmes d'entrée/sortie (1, 2) d'autre part sont positionnés de part et d'autre du plateau tournant (5).

Dans un mode de réalisation, les systèmes d'entrée/sortie (1, 2), le poste de rejet (7) et la zone de stockage temporaire (8) sont situés d'un côté ou de l'autre du plateau tournant (5) indépendamment les uns des autres.

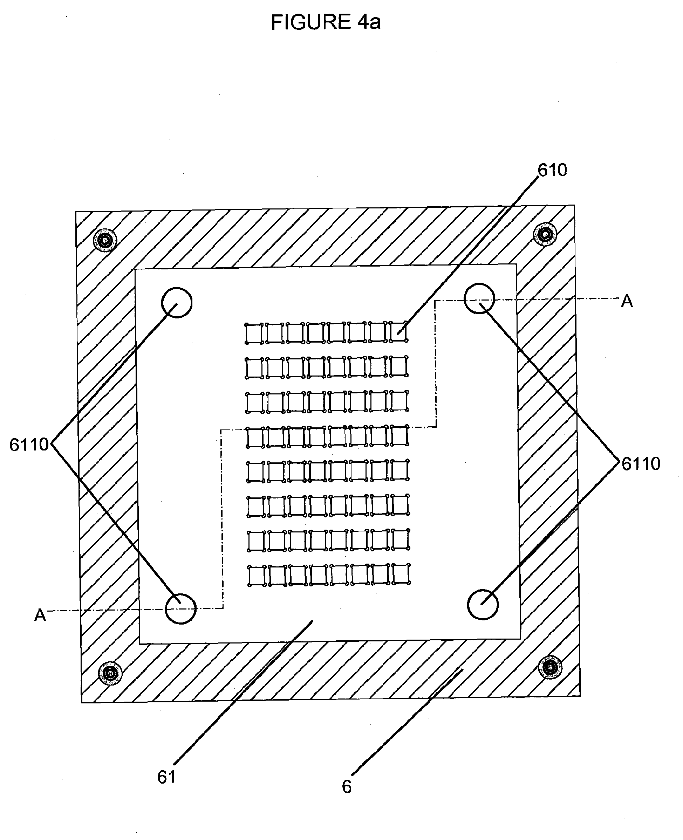

Dans un mode de réalisation, en référence aux figures 4a et 4b, la personnalisation électrique et la personnalisation graphique des composants présents dans un même support d'accueil (6) peuvent être réalisées simultanément.

Dans un mode de réalisation, chaque support d'accueil (6) comprend au moins un logement (610) comportant des moyens d'alignement des composants électroniques. Préférentiellement, ces moyens d'alignement sont compris dans une ligne ou une colonne de la matrice de logements (610) du support d'accueil. Par exemple et de façon non limitative, ces moyens d'alignement sont reliés à des moyens d'aspiration contrôlés par les moyens informatiques (3). Les composants, une fois déposés simultanément par les moyens de transport (4), sont alignés par les moyens d'alignement dans les logements (610) prévus à cet effet. Les composants alignés sont ensuite saisis par les moyens de transport (4) pilotés par les moyens informatiques (3), et déposés dans une autre ligne ou colonne de logements (610) du support d'accueil (6), afin que les composants soient personnalisés.

Dans un mode de réalisation, lorsque le plateau tournant (5) comprend plus d'un support d'accueil (6), le dispositif de personnalisation électrique (50) piloté par les moyens informatiques personnalise les composants électroniques d'un support d'accueil (6) situé en vis-à-vis dudit dispositif de personnalisation électrique (50), puis les composants de chaque autre support d'accueil solidaire du plateau tournant (5) sont successivement personnalisés, suite au mouvement du plateau (5) piloté par les moyens informatiques (3), ledit plateau tournant (5) se déplaçant de telle sorte que chaque support d'accueil (6) soit successivement situé en vis-à-vis du dispositif de personnalisation électrique (50).

Dans un mode de réalisation, afin que l'ordre de sortie des composants personnalisés sur le système de sortie soit toujours respecté, chaque support d'accueil (6) comprend au moins un composant électronique de réserve (R). Préférentiellement, ces composants de réserve sont stockés dans une ligne ou une colonne de la matrice de logements (610) d'un support d'accueil (6). Lorsque les moyens d'acquisition d'images (51) et/ou les moyens informatiques détectent un composant défectueux (*), les moyens informatiques (3) associent l'identifiant et l'ordre de positionnement dans le système de sortie (2) de chaque composant défectueux (*) à un composant de réserve (R). Chaque composant de réserve est alors personnalisé par le système de personnalisation via les moyens informatiques (3). Le composant de réserve personnalisé (R^{p}) comprend alors les informations électriques et graphiques qu'auraient du comprendre le composant défectueux (*).

Dans le cas où par exemple et de façon non limitative de nombreux composants sont identifiés comme défectueux (*) par les moyens d'acquisition d'images (51) et/ou les moyens informatiques (3), nécessitant par exemple et de façon non limitative l'utilisation de composants vierges d'un autre support d'accueil (6), la zone de stockage temporaire (8) est prévue dans le système de personnalisation des composants électroniques, pour stocker les composants personnalisés (P) temporairement. En effet, si des composants personnalisés en lieu et place de composants défectueux (*) se trouvent sur un autre support d'accueil (6) situé en aval d'un premier support d'accueil, mais dont l'ordre de sortie est antérieur à ceux des composants personnalisés présents sur le premier support d'accueil, alors les composants personnalisés dudit premier support (6) sont déplacés par les moyens de transports (4) dans la zone de stockage temporaire (8) avant que les moyens de transport (4) les placent dans le système de sortie (2), de manière à ne pas perturber l'ordre de sortie des composants personnalisés. Ce cas particulier sera détaillé plus loin dans la description.

Le procédé de personnalisation de composants électroniques mis en oeuvre par le système de personnalisation selon l'invention va maintenant être décrit. Les différentes étapes sont réalisées soit par câblage soit par un algorithme exécuté par les moyens informatiques (3), lesquels moyens informatiques (3) sont en communication avec les actionneurs des moyens de transport (5), avec les différents agencements et moyens de déplacement compris dans le plateau tournant (5), le dispositif de personnalisation électrique (50), le poste de gravure (52), le système d'approvisionnement (1, 2), la zone de stockage temporaire (8), ainsi qu'avec les vannes associées aux ventouses comprises dans les moyens de transport (5) et assurant la saisie des composants électroniques personnalisés et/ou à personnaliser.

Lors de la première étape du procédé, les moyens informatiques commandent les moyens de déplacement intégrés au plateau tournant (5) de manière à permettre le mouvement circulaire de celui-ci. Les moyens informatiques (3) reçoivent et enregistrent dans une zone mémoire les coordonnées de chaque support d'accueil solidaire du plateau tournant, de manière à assurer le suivi desdits support d'accueil (6). Les moyens informatiques comprennent également les coordonnées de chaque poste de travail, par exemple le dispositif de personnalisation et le poste de gravure, ainsi que les coordonnées de chargement et/ou déchargement de composants dans la matrice de logements de chaque support d'accueil. Ainsi, lorsque les coordonnées du support d'accueil correspondent aux coordonnées de chargement et/ou déchargement de composants, permettant l'accès des moyens de transport (4) aux logements (610) du support d'accueil (6), les moyens informatiques commandent l'arrêt du déplacement du plateau tournant (5).

Les deuxième et troisième étapes concernent d'abord la saisie, par les moyens de transport (4) pilotés par les moyens informatiques (3), des composants électroniques à personnaliser, stockés dans le système d'entrée (1). Par exemple et de façon non limitative, une vanne est associée à chaque ventouse et les moyens de transport peuvent selon la programmation et l'activation ou la désactivation de vannes pneumatiques télécommandées saisir un seul composant ou une pluralité de composants. Les moyens informatiques (3) commandent le déplacement des moyens de transport (4) vers le système d'entrée (1), de telle sorte que, par exemple et de façon non limitative, les ventouses (40) situées à l'extrémité des moyens de transport soient en vis-à-vis des composants dans le système d'entrée (1), puis saisissent au moins un composant, préférentiellement un nombre de composants équivalent au nombre de colonnes de la matrice de logements (610) du support d'accueil (6). Les moyens informatiques (3) commandent ensuite le déplacement vers des logements (610) vides du support d'accueil (6) placé à la première étape, puis le dépôt simultané des composants dans les logements vides, préférentiellement dans une ligne de la matrice de logements (610).

La quatrième étape est la répétition des deuxième et troisième étapes, de manière à remplir de composants l'ensemble de logements (610) du support d'accueil (6) placé à la première étape.

Par exemple et de façon non limitative, les moyens informatiques (3) commandent les moyens de transport (4) de telle sorte qu'ils comblent de composants la matrice de logements (610) d'un support d'accueil (6) par étapes successives selon des directions parallèles aux lignes de la matrice de logements (610) du support d'accueil (6).

La cinquième étape consiste en la mise en mouvement du plateau tournant (5), mis en oeuvre par des moyens de déplacement du plateau tournant (5) pilotés par les moyens informatiques (3). Les moyens informatiques commandent les moyens de déplacement circulaire du plateau tournant (5), de telle sorte que les coordonnées du support d'accueil (6) correspondent aux coordonnées configurées et enregistrées dans une zone mémoire des moyens informatiques (6), qui permettent au dispositif de personnalisation électrique (50) d'être situé en vis-à-vis du support d'accueil (6) déplacé au cours de cette étape, ledit support d'accueil comprenant dans ses logements (610) au moins un composant à personnaliser.

Au cours de la sixième étape, le dispositif de personnalisation électrique (50) étant en vis-à-vis du support d'accueil (6) déplacé à l'étape précédente, les moyens informatiques (3) commandent le déplacement du dispositif de personnalisation électrique (50) suivant une direction z de telle sorte que les bornes conductrices (501) de ce dernier soient connectées aux plages de contacts de chacun des composants présents dans les logements (610) du support d'accueil (6). Dans un mode de réalisation en référence aux figures 4a et 4b, le support d'accueil (6) comprend des tiges-guides (503) destinées à être insérées dans des trous usinés (6101) dans le support d'accueil lorsque le dispositif de personnalisation électrique (50) se déplace vers le plateau d'accueil (6). Ainsi ces guides permettent de parfaitement aligner le dispositif de personnalisation électrique (50) avec le support d'accueil (6), de telle sorte que chaque borne conductrice (501) du dispositif de personnalisation électrique soit en regard de chaque contact correspondant des composants électroniques à personnaliser.

Au cours de la septième étape, les moyens informatiques (3) initient la personnalisation au moins électrique de chaque composant électronique présent dans les logements (610) du support d'accueil (6). Dans un mode de réalisation, tous les composants du support d'accueil (6) sont programmés simultanément. Dans un mode de réalisation préférentiel, les composants sont programmés individuellement, simultanément ou non, chaque composant programmé comportant des informations pouvant être différentes des autres composants. Par exemple et de façon non limitative, chaque composant comprend au moins une information commune à tous les composants, et au moins une information spécifique à chaque composant. Les moyens informatiques (3) intègrent au moins un programme et/ou une donnée dans une zone mémoire de la puce de chaque composant. Par exemple et de façon non limitative, les moyens informatiques (3) associent à chaque composant personnalisé un identifiant, ses coordonnées dans le logement (610) du support d'accueil (6) et un ordre de positionnement dans le système de sortie (2).

Au cours de la huitième étape du procédé, une fois la personnalisation au moins électrique des composants réalisée, les moyens informatiques (3) commandent le déplacement suivant une direction z des moyens de déplacement solidaire du dispositif de personnalisation électrique (50), de sorte que ce dernier l'éloigne du support d'accueil (6).

Au cours d'une étape optionnelle, les moyens informatiques commandent la mise en mouvement des moyens de déplacement du plateau tournant (5) de telle sorte que les coordonnées du support d'accueil correspondent aux coordonnées configurées et enregistrées dans une zone mémoire des moyens informatiques, qui permettent à un poste de personnalisation graphique d'être en vis-à-vis du support d'accueil (6) déplacé au cours de cette étape, ledit support d'accueil (6) comprenant dans ses logements (610) une pluralité de composants à personnaliser graphiquement. Une fois le support d'accueil (6) positionné pour la personnalisation graphique, les moyens informatiques (3) pilotent le laser et les moyens de déplacement solidaires du laser pour que ce dernier réalise une opération de personnalisation graphique de chaque composant.

Dans un mode de réalisation, en référence aux figures 3a et 3b, la personnalisation graphique et la personnalisation électrique peuvent être réalisées en même temps, le dispositif de personnalisation électrique (50) et le poste de gravure (52) étant disposés dans ce cas en vis-à-vis du même côté du plateau tournant (5). Dans ce cas particulier, l'étape de déplacement du plateau tournant (5) vers le poste de gravure (52) n'est évidemment pas nécessaire

Dans un mode de réalisation alternatif, en référence aux figures 4a et 4b, la personnalisation graphique et la personnalisation électrique peuvent être réalisées en même temps, le dispositif de personnalisation électrique (50) et le poste de gravure (52) étant disposés dans ce cas en vis-à-vis de part et d'autre du plateau tournant (5). Dans ce cas particulier, l'étape de déplacement du plateau tournant (5) vers le poste de gravure (52) n'est évidemment pas nécessaire.

Au cours d'une autre étape optionnelle, un utilisateur peut commander l'arrêt du système de personnalisation, de manière à vérifier personnellement les composants électroniques personnalisés et/ou à personnaliser et/ou en cours de personnalisation. L'utilisateur interagit avec les moyens informatiques (3) via une interface homme/machine de manière à stopper le fonctionnement du système de personnalisation.

La neuvième étape concerne la mise en place du support d'accueil (6) de telle sorte que les moyens de transport (4), pilotés par les moyens informatiques (3), puissent accéder à tous les logements (610) du support d'accueil (6), lesdits logements (610) comprenant les composants électroniques personnalisés.

Les dixième et onzième étapes concernent d'abord la saisie, par les moyens de transport (4) pilotés par les moyens informatiques (3), des composants électroniques personnalisés, stockés dans les logements (610) du support d'accueil. Par exemple et de façon non limitative, les moyens de transport (4) peuvent saisir un seul composant ou une pluralité de composants. Préférentiellement, les moyens de transport (4) saisissent les composants présents dans une direction de la matrice de logements (610) du support d'accueil (6). Les moyens informatiques (3) commandent le déplacement des moyens de transport (4) vers un premier logement (610) ou un groupe de logements, de telle sorte que, par exemple et de façon non limitative, les ventouses (40) situées à l'extrémité des moyens de transport (4) soient en vis-à-vis des composants dans les logements (610) du support d'accueil (6), puis saisissent au moins un composant. Les moyens informatiques (3) commandent ensuite le déplacement vers le système de sortie (2) des moyens de transport (4) placés à la dixième étape, puis le dépôt simultané d'un groupe de composants dans les alvéoles (20) du système de sortie (2). Préférentiellement, les moyens informatiques (3) utilisent l'identifiant et l'ordre de sortie associé à chaque composant personnalisé (P), ces informations étant enregistrées dans une zone mémoire des moyens informatiques (3), de telle sorte que les composants soient déposés dans les alvéoles (20) du système de sortie (2) par les moyens de transport (4) dans un ordre précis.

La douzième étape est la répétition des dixième et onzième étapes, de manière à vider de composants l'ensemble des logements (610) du support d'accueil (6) placé à la neuvième étape. Préférentiellement, les moyens de transport (4) vident les composants de la matrice de logements (610) du support d'accueil (6) par étapes successives dans des directions parallèles à une ligne ou une colonne de matrice de logements (610).

Dans un mode de réalisation, à chaque fois que les moyens de transport (5) vident une direction de la matrice de logements (610) d'un support d'accueil (6) pour remplir les alvéoles (20) du système de sortie (2) de composants personnalisés, les moyens de transport (4) commandés par les moyens informatiques (3) saisissent une pluralité de composants vierges dans le système d'entrée (1) puis les déposent dans la direction de la matrice de logements venant d'être vidée. Ainsi, une direction de la matrice de logements (610) vidée est remplie de composants vierges avant qu'une autre direction de la matrice comprenant des composants personnalisés ne soit vidée. Cette étape se répète pour toutes les directions parallèles de la matrice de logements (610) d'un support d'accueil (6) et pour tous les supports d'accueil (6) solidaires du plateau tournant (5).

Dans le cas où le plateau tournant (5) comprend au moins deux supports d'accueil (6), le procédé comprend une ultime étape, consistant en la répétition des douze étapes précédentes pour chaque support d'accueil (6). Les supports d'accueil sont espacés sur le plateau tournant de telle sorte que les opérations de personnalisation différentes puissent être réalisées. Par exemple et de façon non limitative, le plateau tournant (5) peut comporter trois supports d'accueil, le premier étant en vis-à-vis du poste de personnalisation électrique (50), le second en vis-à-vis du poste de gravure (52), et le dernier est placé de manière à ce que les moyens de transport (4) puissent accéder aux logements (610) du support d'accueil (6). Dans certains modes de réalisation, il est possible d'avoir davantage de supports d'accueil (6) et de dupliquer les dispositifs de personnalisation graphique (52) et/ou électrique (50) pour gagner du temps.

Suite à l'étape de personnalisation électrique et/ou graphique, une étape optionnelle de vérification des données intégrées dans la puce de chaque composant et/ou gravées sur chaque composant est réalisée par les moyens informatiques (3). Si au moins un composant défectueux (*) est détecté, plusieurs scénarii sont possibles suivant le nombre de composants défectueux (*) détectés et/ou leur position dans la matrice de logements du support d'accueil (6). Afin que ces scénarii soient applicables, l'opération de personnalisation graphique doit être réalisée pendant que les bornes (501) du dispositif de personnalisation électrique (50) sont connectées, directement ou non, aux plages de contacts des composants personnalisés (P) et/ou à personnaliser.

Si les moyens d'acquisition d'images (51) et/ou les moyens informatiques détectent des composants défectueux (*), et si il n'y a pas plus de composant défectueux (*), détectés par les moyens informatiques (3) suite à la lecture de l'identifiant et/ou des coordonnées desdits composants défectueux (*), que de composants de réserve présents au sein (610) d'un poste d'accueil (6), alors les étapes du procédé de personnalisation à la suite de la septième étape se déroulent comme suit.

Au cours de la huitième étape, les moyens informatiques (3) lisent l'identifiant et les coordonnées mémorisées correspondant aux composants détectés comme défectueux (*) dans la matrice de logements (610).

Au cours de la neuvième étape, le dispositif de personnalisation électrique (50) et/ou le poste de gravure (52) piloté(s) par les moyens informatiques (3) personnalisent les composants de réserve, par exemple présents dans une direction de la matrice de logements (610), chaque composant de réserve recevant les informations de personnalisation initialement prévue pour chaque composant défectueux (*), y compris les identifiants, les coordonnées dans la matrice de logements (610) et la position dans le système de sortie (2).

Au cours de la dixième étape, les moyens informatiques commandent le déplacement du poste de gravure et/ou du dispositif de personnalisation électrique, ces derniers s'éloignant ainsi du support d'accueil (6).

Au cours de la onzième étape, les moyens informatiques (3) pilotent les moyens de déplacement du plateau tournant (5) qui mettent ce dernier en mouvement circulaire, suivi de l'arrêt du mouvement de plateau tournant (5) lorsque les coordonnées d'un support d'accueil (6), suivies par les moyens informatiques, correspondent aux coordonnées de la zone de chargement/déchargement de composants enregistrées dans une zone mémoire des moyens informatiques de façon que les moyens de transport (4), pilotés par les moyens informatiques (3), puissent accéder à la matrice de logements du support d'accueil (6).

Au cours de la douzième étape, les moyens de transport (4) pilotés par les moyens informatiques saisissent les composants (P) personnalisés présents dans une direction de la matrice de logements (610) du support d'accueil (6).

Au cours de la treizième étape, les moyens informatiques (3) commandent le déplacement des moyens de transport (4) vers le poste de rejet (7). Une fois que les composants, maintenus par les ventouses du bras, sont au dessus des bacs de rejet (70), les moyens informatiques (3) commandent la désactivation des vannes des ventouses ayant saisi les composants défectueux (*), l'identifiant et les coordonnées des composants défectueux (*) étant enregistrées dans une zone mémoire des moyens informatiques (3).

Au cours de la quatorzième étape, les moyens informatiques (3) commandent le déplacement des moyens de transport (4) vers le système de sortie (2). Une fois que les composants restants (P), maintenus par les ventouses du bras, sont au dessus des alvéoles (20) du système de sortie (2), les moyens informatiques (3) commandent la désactivation des vannes des ventouses ayant saisi les composants restants, lesdits composants étant ainsi déposés dans les alvéoles (20) du système de sortie (2). Il reste donc autant d'alvéoles faisant l'objet d'un remplissage spécifique que de composants défectueux (*), en lieu et place de chaque composant défectueux (*).

Au cours de la quinzième étape, les moyens informatiques (3) commandent le déplacement des moyens de transport (4) vers au moins un logement (610) de la matrice de logement (610) du support d'accueil (6) comprenant chacun un composant de réserve. Par exemple et de façon non limitative, ces composants de réserve sont dans des logements situés dans la même ligne ou colonne de la matrice de logements du support d'accueil (6). Les moyens de transports (4) saisissent les composants de réserve personnalisés (R^{p}) destinés à remplacer les composants défectueux (*), suite à la lecture par les moyens informatiques (3) de l'identifiant et des coordonnées de chaque composant de réserve en remplacement de chaque composant défectueux (*). Chaque composant de réserve (R^{p}) remplaçant un composant défectueux (*) et chaque alvéole faisant l'objet d'un remplissage spécifique sont respectivement alignés sur des axes parallèles à la direction x. La quinzième étape peut être exécutée avant ou après la quatorzième étape.

Au cours de la seizième étape, les moyens informatiques (3) commandent le déplacement des moyens de transport (4) vers le système de sortie (2). Une fois que les composants de réserve personnalisés (R^{p}), maintenus par les ventouses du bras, sont au dessus des alvéoles (20) du système de sortie (2) faisant l'objet d'un remplissage spécifique, les moyens informatiques (3) commandent la désactivation des vannes des ventouses ayant saisi les composants de réserve personnalisés, lesdits composants étant ainsi déposés dans les alvéoles (20) restées vides du système de sortie (2). L'ordre de dépôt des composants est ainsi respecté.

Les étapes 12 à 16 sont répétées pour chaque direction de la matrice de logements (610) du support d'accueil (6).

Si les moyens d'acquisition d'images (51) et/ou les moyens informatiques détectent des composants défectueux (*), et si il y a moins de composants de réserve dans un support d'accueil (6) que de composants défectueux (*) par matrice de logements (610) d'un poste d'accueil (6) détectés par les moyens informatiques (3) suite à la lecture des coordonnées desdits composants défectueux (*), alors les étapes du procédé de personnalisation à la suite de la septième étape peuvent par exemple se dérouler comme suit.

Suite à la détection de composants défectueux (*), les étapes 8 et 9 restent quasiment inchangées, l'ensemble des composants de réserve du premier support d'accueil (6) étant personnalisés. Il reste donc une partie des composants défectueux (*) du premier support d'accueil (6) qui n'a pas été remplacée faute d'un nombre suffisant de composants de réserve dans le premier support d'accueil (6).

Au cours de la dixième étape, les moyens informatiques (3) pilotent le déplacement du poste de gravure (52) et/ou du dispositif de personnalisation électrique (50), ces derniers s'éloignant du premier support d'accueil (6) comprenant les composants personnalisés (P).

Au cours de la onzième étape, le plateau tournant (5) est mis en mouvement par les moyens de déplacement du plateau tournant (5) pilotés par les moyens informatiques (3), suivi de l'arrêt du mouvement du plateau tournant lorsque les coordonnées de la position du premier support d'accueil (6), suivie par les moyens informatiques, correspondent aux coordonnées de la zone de chargement/déchargement de composants enregistrées dans une zone mémoire des moyens informatiques de façon que les moyens de transport (4), pilotés par les moyens informatiques (3), puissent accéder à la matrice de logements du support d'accueil (6)

Au cours de la douzième étape, les moyens informatiques (3) pilotent les moyens de transports (4) de sorte que ceux-ci déchargent les composants personnalisé (P) et les composants de réserve personnalisés (R^{p}) du premier support d'accueil (6) dans les alvéoles (20) du système de sortie (2), les moyens informatiques (3) opérant en plusieurs étapes successives selon des directions parallèles par rapport à la ligne de matrice de manière à ce que l'ordre de positionnement des composants personnalisés (P, R^{p}) soit respecté dans le système de sortie (2), les composants détectés comme défectueux (*) étant à chaque étape transportés et jetés par les moyens de transport (4) dans au moins un bac (70) du poste de rejet (7), et les composants personnalisés du premier support d'accueil (6) ordonnés selon un positionnement postérieur au premier composant défectueux (*), n'ayant pu être remplacés par un composant de réserve du premier support d'accueil (6), étant chargés par étapes successives dans des directions parallèles dans les alvéoles (80) de la zone de stockage temporaire (8).

Au cours de la treizième étape, les moyens de transport (4) pilotés par les moyens informatiques (3) chargent en composants (C) provenant du système d'entrée, la matrice de logements (610) du premier support d'accueil (6). Ce chargement est réalisé en plusieurs étapes successives selon des directions parallèles par rapport à la ligne ou la colonne de matrice de logements (610).

Au cours de la quatorzième étape, les moyens informatiques (3) pilotent les moyens de déplacement du plateau tournant (5) qui mettent ce dernier en mouvement circulaire, suivi de l'arrêt du mouvement de plateau tournant (5) lorsque les coordonnées d'un second support d'accueil (6), suivies par les moyens informatiques, correspondent aux coordonnées du poste de gravure (52) et/ou du poste de personnalisation électrique (50) enregistrées dans une zone mémoire des moyens informatiques, de façon que lesdits postes (50, 52), pilotés par les moyens informatiques (3), puissent accéder à la matrice de logements du second support d'accueil (6).

Au cours de la quinzième étape, les moyens informatiques (3) personnalisent les composants, situés dans la zone de réserve ou non, du second support d'accueil (6). Un certain nombre de composants reçoivent les informations de personnalisation initialement prévue pour chaque composant défectueux (*) présents dans le premier support d'accueil (6) et n'ayant pas pu être remplacé.

Au cours de la seizième étape, les moyens informatiques (3) commandent le déplacement du poste de gravure (52) et/ou du dispositif de personnalisation électrique (50), ces derniers s'éloignant du second support d'accueil (6) comprenant les composants personnalisés (P).

Au cours de la dix-septième étape, les moyens informatiques (3) pilotent les moyens de déplacement du plateau tournant (5) qui mettent ce dernier en mouvement circulaire, suivi de l'arrêt du mouvement de plateau tournant (5) lorsque les coordonnées du second support d'accueil (6), suivies par les moyens informatiques, correspondent aux coordonnées de la zone de chargement/déchargement de composants enregistrées dans une zone mémoire des moyens informatiques de façon que les moyens de transport (4), pilotés par les moyens informatiques (3), puissent accéder à la matrice de logements du second support d'accueil (6).

Au cours de la dix-huitième étape, les moyens de transports saisissent les composants personnalisés (P) du second support d'accueil (6), ayant reçu les informations de personnalisation initialement prévue pour chaque composant défectueux (*) du premier support d'accueil (6) et n'ayant pas pu être remplacé, dans les alvéoles (20) faisant l'objet d'un remplissage spécifique du système de sortie (2), de manière à ce que l'ordre de positionnement des composants personnalisés soit respecté.

Au cours de la dix-neuvième étape, les moyens de transport (4), pilotés par les moyens informatiques (3), déplacent par étape successives dans des directions parallèles les composants personnalisés (P, R^{p}) initialement dans le premier support d'accueil (6), depuis la zone de stockage temporaire (8) vers le système de sortie (2) de manière à ce que l'ordre de positionnement des composants personnalisés soit respecté.

Au cours de la dernière étape, les moyens de transport (4) pilotés par les moyens informatiques (3) chargent par étapes successives dans des directions parallèles les composants personnalisés restant du second support d'accueil (6) vers la zone de sortie (2), de manière à ce que l'ordre de positionnement des composants personnalisés soit respecté.

Dans une variante, à la suite de la onzième étape, les moyens de personnalisation électrique (50) et/ou les moyens de gravure (52) en vis-à-vis du second support d'accueil (6) sont positionnés par les moyens informatiques (3) de manière à permettre la personnalisation par les moyens informatiques de composants situés dans les logements (610) du second support d'accueil (6) en même temps que les composants personnalisé (P) et les composants de réserve personnalisés (R^{p}) du premier support d'accueil (6) sont déplacés par les moyens de transport (4) dans les alvéoles (20) du système de sortie (2).

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de personnalisation de composants électroniques, **caractérisé en ce qu'**il comprend :
- au moins un plateau tournant (5) dans un plan (x, y) ayant un mouvement circulaire assuré par des moyens de déplacement commandés par les moyens informatiques (3), le plateau tournant étant rendu solidaire d'au moins un support d'accueil (6) comportant une matrice de logements (610) de n lignes et m colonnes, les logements (610) étant destinés à recevoir chacun un composant électronique, les moyens informatiques (3) recevant les coordonnées de la position de chaque support d'accueil (6), enregistrées dans un espace mémoire des moyens informatiques (3), assurant ainsi le suivi desdits supports d'accueil (6),
- au moins un système d'approvisionnement des composants électroniques, tangentielle au plateau tournant,
- au moins un dispositif de personnalisation au moins électrique (50) avec ou sans contact, disposé sur le trajet de chaque support d'accueil, le dispositif de personnalisation électrique permettant la personnalisation des composants électroniques d'un même support d'accueil, les composants de chaque support d'accueil (6) solidaire du plateau tournant (5) étant successivement personnalisables au moins électriquement,
- au moins un poste de rejet (7) comprenant au moins un bac (70), et une zone matricielle comportant une pluralité d'alvéoles pour le stockage temporaire (8) de composants, le poste de rejet (7) et la zone de stockage temporaire (8) pouvant être positionnés d'un côté ou de l'autre du plateau tournant (5),
- des moyens informatiques (3) pour positionner et déplacer des moyens de transport, commander la saisie et le transport d'une pluralité de composants alignés selon la direction y, les moyens de transport (4) se déplaçant le long d'un axe perpendiculaire, dans la direction x entre la zone de stockage temporaire (8), le poste de rejet (7), le système d'approvisionnement (1, 2) et la matrice de logements de chaque support d'accueil (6) présenté par le plateau tournant (5) aux moyens de transport.

2. Système de personnalisation selon la revendication précédente, **caractérisé en ce que** le dispositif de personnalisation électrique (50) est un dispositif de personnalisation avec contact, comportant des bornes conductrices (501) et étant rendu solidaire de moyens de déplacement dans une direction perpendiculaire au plateau (5), pilotés par les moyens informatiques (3), chaque borne (501) du dispositif de personnalisation électrique étant connectable à chaque plage de contacts des composants électroniques présents dans les logements (610) d'un support d'accueil lorsque le plateau tournant (5) est immobile en rotation.

3. Système de personnalisation selon la revendication 1, **caractérisé en ce que** le dispositif de personnalisation électrique (50) est un dispositif de personnalisation sans contact comportant une pluralité d'antennes radiofréquence et pouvant être rendu solidaire de moyens de déplacement dans une direction perpendiculaire au plateau (5), pilotés par les moyens informatiques (3), chaque antenne du dispositif de personnalisation sans contact étant connectable sans contact à un microcircuit des composants électroniques présents dans les logements (610) d'un support d'accueil (6).

4. Système de personnalisation selon l'une quelconque des revendications 1 à 3, **caractérisé en ce que** le système de personnalisation comprend un dispositif de personnalisation électrique avec contact et un dispositif de personnalisation électrique sans contact disposés en vis-à-vis d'un même support d'accueil (6) de part et d'autre du plateau tournant (5), personnalisant des composants électroniques d'un même support d'accueil (6), ces composants comprenant au moins un microcircuit relié électriquement aux plages de contacts et au moins un microcircuit pouvant être personnalisé avec des ondes radiofréquence, les différents microcircuits pouvant être personnalisés simultanément ou séquentiellement.

5. Système de personnalisation selon l'une quelconque des revendications 1 à 3, **caractérisé en ce que** le système de personnalisation comprend un dispositif de personnalisation avec contact et un dispositif de personnalisation sans contact disposés en vis-à-vis de deux supports d'accueil (6) différents, les composants de chaque support d'accueil (6) solidaire du plateau tournant (5) étant successivement personnalisables électriquement.

6. Système de personnalisation selon l'une quelconque des revendications précédentes, **caractérisé en ce qu'**il comprend un agencement pour reconnaitre la position, sur chaque support d'accueil (6), de chaque composant à personnaliser et/ou en cours de personnalisation et/ou personnalisé.

7. Système de personnalisation selon l'une quelconque des revendications 1 à 2, **caractérisé en ce que** chaque logement (610) d'un support d'accueil (6) comporte au moins un plot de contact (600) dont la configuration correspond à celle de la plage de contacts du composant introduit dans le logement, les plots de contacts (600) étant connectés aux conducteurs (601) d'une carte d'interface (60) comprise dans chaque support d'accueil, la carte d'interface (60) comportant des bornes (602) reliées aux conducteurs (601) de ladite carte d'un support d'accueil (6), de manière à permettre la personnalisation électrique des composants présents dans les logements (610) d'un support d'accueil par les moyens informatiques (3).

8. Système de personnalisation selon l'une quelconque des revendication 1 à 2, **caractérisé en ce que** chaque logement (610) d'un support d'accueil (6) comprend une ouverture (6100) dont les bords retiennent chaque composant présent dans chaque logement (610) du support d'accueil (6), les moyens informatiques pilotant les moyens de déplacement du dispositif de personnalisation électrique de telle sorte que les bornes conductrices dudit dispositif de personnalisation électrique soient connectables aux plages de contacts de chaque composant présent dans le support d'accueil avec le dispositif de personnalisation électrique (50).

9. Système de personnalisation selon l'une quelconque des revendications précédentes, **caractérisé en ce qu'**il comprend un poste de gravure (52) disposé sur le trajet de chaque support d'accueil (6), comprenant au moins des moyens de gravure et/ou d'enlèvement de matière agencés pour être déplaçables en vis-à-vis d'au moins un support d'accueil (6), les moyens de gravure et/ou d'enlèvement de matière et l'agencement assurant le déplacement étant pilotés par les moyens informatiques (3).

10. Système de personnalisation selon la revendication précédente, **caractérisé en ce que** le poste de gravure comprend un dispositif d'acquisition d'images (51) piloté par les moyens informatiques (3), permettant de contrôler les gravures réalisées par les moyens de gravure et/ou d'enlèvement de matière, au moins une image des informations graphiques étant enregistrée dans une zone mémoire des moyens informatiques associée à l'identifiant du composant identifié par sa position, un algorithme mis en oeuvre par les moyens informatiques réalisant une comparaison entre les gravures acquises par les moyens d'acquisition d'images (51) et les informations graphiques enregistrées dans une zone mémoire des moyens informatiques (3)

11. Système de personnalisation selon l'une quelconque des revendications 1 à 6 et 8 à 10, **caractérisé en ce que** les moyens informatiques (3) pilotent les moyens de déplacement rendus solidaires du dispositif de personnalisation électrique (50), de telle sorte que les bornes conductrices (501) dudit dispositif de personnalisation électrique soient directement connectables aux plages de contacts des composants électroniques présents dans les logements (610) d'un support d'accueil (6), de manière à permettre la personnalisation électrique desdits composants par les moyens informatiques (3), le poste de gravure (52) étant disposé en vis-à-vis du poste de personnalisation électrique (50) de l'autre côté du plateau tournant (5).

12. Système de personnalisation selon l'une quelconque des revendications précédentes, **caractérisé en ce qu'**il comprend un plateau pousseur (500) comportant un agencement pilotés par les moyens informatiques (3) pour le déplacer dans une direction perpendiculaire au plateau tournant (5), de manière à maintenir les composants dans les logements prévus à cet effet au cours de la personnalisation desdits composants.

13. Système de personnalisation selon l'une quelconque des revendications précédentes, **caractérisé en ce que** les moyens informatiques (3) lisent les informations intégrées dans une zone mémoire des composants reliés au dispositif de personnalisation électrique (50) et personnalisés, de manière à vérifier l'intégrité des données enregistrées dans une zone mémoire de chaque composant.

14. Système de personnalisation selon la revendication précédente, **caractérisé en ce que** le plateau pousseur (500) comprend au moins une ouverture (502) pour permettre la réalisation des opérations de gravure des composants.

15. Système de personnalisation selon l'une quelconque des revendications précédentes, **caractérisé en ce qu'**il comprend un système d'entrée (1) et un système de sortie (2) contrôlés indépendamment, lesdits systèmes comprenant chacun au moins un dispositif d'acquisition d'images (11, 21) piloté par les moyens informatiques (3), permettant de contrôler la présence ou non de composants dans les alvéoles (10, 20) des systèmes d'entrée et de sortie.

16. Système de personnalisation selon l'une quelconque des revendications précédentes, **caractérisé en ce qu'**un utilisateur peut interagir avec les moyens informatiques (3) via une interface homme/machine de manière à stopper le fonctionnement dudit système afin de vérifier les composants électroniques personnalisés et/ou à personnaliser et/ou en cours de personnalisation.

17. Système de personnalisation selon l'une quelconque des revendications précédentes, **caractérisé en ce que**, les moyens d'acquisition d'images (51) et/ou les moyens informatiques (3) détectant au moins une erreur de personnalisation d'au moins un composant, les moyens de transport pilotés par les moyens informatiques saisissent au moins le composant défectueux (*), le transportent et le déposent dans le poste de rejet (7).

18. Système de personnalisation selon la revendication précédente, **caractérisé en ce que** le poste de rejet (7) comprend plusieurs bacs (70), chaque bac stockant des composants défectueux (*) selon un type de panne détectée par les moyens d'acquisition d'images (51) et/ou les moyens informatiques (3).

19. Système de personnalisation selon l'une quelconque des revendications précédentes, **caractérisé en ce que** chaque support d'accueil (6) comprend au moins un composant électronique de réserve, un certain nombre de composants de réserve étant personnalisés pour remplacer un certain nombre de composants défectueux (*) détectés par les moyens informatiques (3), l'identifiant et l'ordre de positionnement sur le système de sortie (2) de chaque composant défectueux (*) étant associés par les moyens informatiques à la position d'un composant de réserve correspondant utilisé et personnalisé avec l'identifiant et les données du composant défectueux (*).

20. Système de personnalisation selon l'une quelconque des revendications précédentes, **caractérisé en ce que** les moyens informatiques (3) utilisent l'ordre de positionnement sur le système de sortie (2) et l'identifiant de chaque composant personnalisé, enregistrés dans une zone mémoire des moyens informatiques (3), afin que les moyens de transport (4), pilotés par lesdits moyens informatiques, déposent chaque composant dans le système de sortie (2) du système de personnalisation dans un ordre précis, l'ordre de dépôt des composants étant enregistré dans une zone mémoire des moyens informatiques (3).

21. Système de personnalisation selon l'une quelconque des revendications précédentes, **caractérisé en ce que** les moyens de transport (4), pilotés par les moyens informatiques (3), déposent au moins un composant personnalisé dans la zone de stockage temporaire (8), avant de réintégrer lesdits composants dans le système de sortie (2) du système de personnalisation selon un ordre enregistré dans une zone mémoire des moyens informatiques.

22. Système de personnalisation selon l'une quelconque des revendications 1 à 21, **caractérisé en ce que** la zone de stockage temporaire (8) a une fonction de système d'entrée et/ou de sortie et/ou de stockage temporaire de composants personnalisés.

23. Système de personnalisation selon l'une quelconque des revendications précédentes, **caractérisé en ce que** la matrice de logements (610) d'un support d'accueil (6) comprend une ligne de logements (610) comportant des moyens d'alignement des composants électroniques dans lesquels les composants sont déposés par les moyens de transports pilotés par les moyens informatiques, les composants une fois alignés étant saisis et déposés par les moyens de transport (4) dans une autre ligne de la matrice de logements (610) du même support d'accueil en prévision de la personnalisation des composants.

24. Procédé de personnalisation de composants électroniques mis en oeuvre par un système de personnalisation selon la revendication 1, **caractérisé en ce qu'**il comprend :
a) une étape de dépôt de composants électroniques à personnaliser dans les logements (610) d'un support d'accueil (6) tant qu'il y a au moins un logement (610) vide, la matrice de logements (610) étant remplie par étapes successives selon des directions parallèles,
b) une étape de mise en mouvement du plateau tournant (5) mis en oeuvre par les moyens de déplacement du plateau tournant pilotés par les moyens informatiques (3), de telle sorte que le support d'accueil (6) comprenant les composants soit placé en vis-à-vis du dispositif de personnalisation électrique (50),
c) une étape de mise en place du dispositif de personnalisation électrique (50) par les moyens informatiques (3) de telle sorte que les bornes conductrices (501) dudit dispositif soient connectées aux plages de contacts des composants présents dans les logements (610) du support d'accueil (6),
d) une étape de personnalisation au moins électrique des composant(s) mise en oeuvre par les moyens informatiques (3), au moins un programme et/ou au moins une donnée étant intégrée dans une zone mémoire de chaque composant électronique connecté au dispositif de personnalisation au moins électrique (50),
e) une étape de déplacement du dispositif de personnalisation au moins électrique (50), mis en oeuvre par les moyens informatiques (3) pilotant les moyens de déplacement dudit dispositif, ce dernier s'éloignant du support d'accueil (6) comprenant les composants personnalisés électriquement,
f) une étape de mise en mouvement du plateau tournant (5) mis en oeuvre par les moyens de déplacement du plateau tournant pilotés par les moyens informatiques (3), de telle sorte que les moyens de transport (4) puissent accéder à la matrice de logements (610) du support d'accueil (6) comprenant les composants personnalisés (P),
g) une étape de déchargement des composants personnalisés de chaque support d'accueil (6) par les moyens de transports (4) pilotés par les moyens informatiques (3) opérant en plusieurs étapes successives selon des directions parallèles par rapport à la ligne ou la colonne de matrice,
h) une étape de répétition des étapes précédentes pour tous les supports d'accueil (6) solidaires du plateau tournant (5).

25. Procédé de personnalisation selon la revendication précédente, **caractérisé en ce que** l'étape a) de dépôt de composants électroniques dans les logements d'un support d'accueil comprend les étapes suivantes :
a) une étape de déplacement du plateau tournant (5) mis en oeuvre par les moyens de déplacement commandés par les moyens informatiques (3), suivi de l'arrêt du mouvement de plateau tournant lorsque les coordonnées de la position d'un support d'accueil (6), suivie par les moyens informatiques, correspondent aux coordonnées d'une zone de chargement/déchargement de composants enregistrées dans une zone mémoire des moyens informatiques de façon que les moyens de transport (4), pilotés par les moyens informatiques (3), puissent accéder à la matrice de logements du support d'accueil (6),
b) une étape de saisie d'une pluralité de composants électroniques par les moyens de transport (4), pilotés par les moyens informatiques (3), depuis le système d'entrée (1) comprenant des composants non personnalisés,
c) une étape de dépôt simultané de chaque composant saisi par les moyens de transport (4) dans un logement (610) respectif du support d'accueil (6), chaque logement (610) comprenant un seul composant, les logements remplis à cette étape appartenant à une même direction de la matrice,
d) une étape de répétition des étapes b) et c) tant qu'il y a au moins un logement (610) vide, la matrice de logements (610) étant remplie par étapes successives selon des directions parallèles.

26. Procédé de personnalisation selon la revendication 24, **caractérisé en ce que** l'étape g) de déchargement de composants électroniques comprend les étapes suivantes :
a) une étape de saisie par les moyens de transport (4), pilotés par les moyens informatiques (3), des composants personnalisés (P) présents dans une ligne de la matrice de logements (610) du support d'accueil (6),
b) une étape de dépôt des composants personnalisés saisis par les moyens de transport (4) vers le système de sortie (2) destiné à récupérer un groupe de composants personnalisés alignés,
c) une étape de répétition des étapes a) et b), de manière à vider les logements (610) des composants personnalisés, la matrice de logements (610) étant vidée par étapes successives selon des directions parallèles.

27. Procédé de personnalisation selon l'une quelconque des revendications 24 à 26, **caractérisé en ce que** les étapes a) et g) de dépôt et de déchargement de composants électronique sont successivement réalisées pour chaque direction d'une matrice de logements (610) d'un support d'accueil (6), de façon que chaque direction de la matrice de logements soit tour à tour vidée de composants personnalisés (P) par les moyens de transport (4) pilotés par les moyens informatiques (3), puis remplie de composants vierges provenant du système d'entrée (1) par les moyens de transport (4) pilotés par les moyens informatiques (3).

28. Procédé de personnalisation selon l'une quelconque des revendications 24 à 27, **caractérisé en ce qu'**il comprend une étape d'attribution par les moyens informatiques (3) d'un identifiant et d'un ordre de positionnement sur le système de sortie (2) à chaque composant électronique personnalisé (P), ledit identifiant, l'ordre de positionnement et les coordonnées de la position de chaque composant dans un logement (610) étant enregistrés dans un espace mémoire des moyens informatiques (3), de telle sorte que les composants personnalisés soient déposés par les moyens de transport (4) dans le système de sortie (2) à l'étape k) dans un ordre précis.

29. Procédé de personnalisation selon l'une quelconque des revendications 24 à 28, **caractérisé en ce qu'il** comprend une étape de personnalisation graphique réalisée par des moyens de gravure, compris dans un poste de gravure (52) et pilotés par les moyens informatiques (3).

30. Procédé de personnalisation selon les revendications 24 à 29, **caractérisé en ce que** les étapes de personnalisation électrique et graphique des composants présents dans un même support d'accueil (6) sont réalisées en même temps.

31. Procédé de personnalisation selon l'une quelconque des revendications 24 à 30, **caractérisé en ce qu'**il comprend une étape de vérification des informations de personnalisation électriques et/ou graphique, réalisée par les moyens d'acquisition d'images (51) et/ou les moyens informatiques (3).

32. Procédé de personnalisation selon l'une quelconque des revendications 24 à 31, **caractérisé en ce qu'**il comprend une étape de vérification des composants électroniques personnalisés (P) et/ou à personnaliser et/ou en cours de personnalisation réalisée par un utilisateur, l'utilisateur pouvant interagir avec les moyens informatiques (3) via une interface homme/machine de manière à stopper le fonctionnement du système de personnalisation.

33. Procédé de personnalisation selon l'une quelconque des revendications 24 à 32, **caractérisé en ce qu'il** comprend à la suite de l'étape d de personnalisation, une étape de vérification par les moyens d'acquisition d'images (51) et/ou les moyens informatiques (3) pour détecter des erreurs de personnalisation, le nombre de composants défectueux (*) n'excédant pas le nombre de composants de réserve présents dans la matrice de logements (610) du support d'accueil (6), l'étape de vérification étant au moins suivie par :
e) une étape de lecture de l'identifiant et/ou des coordonnées mémorisées correspondant aux composants détectés comme défectueux (*) par les moyens d'acquisition d'images (51) et/ou les moyens informatiques (3),
f) une étape de personnalisation de composants de réserve présents dans la matrice de logements (610), par le dispositif de personnalisation électrique (50) et/ou le poste de gravure (52) piloté(s) par les moyens informatiques (3), chaque composant de réserve recevant les informations de personnalisation initialement prévue pour chaque composant défectueux (*),
g) une étape de déplacement du poste de gravure (52) et/ou du dispositif de personnalisation électrique (50), mis en oeuvre par les moyens informatiques (3) pilotant les moyens de déplacement desdits poste et dispositif, ces derniers s'éloignant du support d'accueil (6) comprenant les composants personnalisés (P),
h) une étape de mise en mouvement du plateau tournant (5) mis en oeuvre par les moyens de déplacement du plateau tournant pilotés par les moyens informatiques (3), suivi de l'arrêt du mouvement du plateau tournant lorsque les coordonnées de la position d'un support d'accueil (6), suivie par les moyens informatiques, correspondent aux coordonnées de la zone de chargement/déchargement de composants enregistrées dans une zone mémoire des moyens informatiques de façon que les moyens de transport (4), pilotés par les moyens informatiques (3), puissent accéder à la matrice de logements du support d'accueil (6),
i) une étape de saisie par les moyens de transport (4), pilotés par les moyens informatiques (3), des composants personnalisés (P) présents dans une direction de la matrice de logements (610) du support d'accueil (6),
j) une étape de déplacement des moyens de transport (4) vers le poste de rejet (7), suivi du rejet du/des composants défectueux (*) parmi les composants saisis par les moyens de transport (4),
k) une étape de déplacement des moyens de transport (4) vers le système de sortie (2), suivi du dépôt des composants personnalisés dans les alvéoles (20) du système de sortie (2), chaque alvéole ayant du recevoir un composant défectueux (*) faisant l'objet d'un remplissage spécifique,
1) une étape de déplacement des moyens de transport (4) vers l'emplacement d'au moins un composant de réserve présent dans la matrice de logements (610) du support d'accueil (6), suivi de la saisie du/des composants de réserve personnalisés et remplaçant les composants défectueux (*), chaque composant de réserve remplaçant un composant défectueux (*), cette étape 1) pouvant s'exécuter indifféremment avant ou après l'étape k),
m)une étape de déplacement des moyens de transport (4) vers le système de sortie (2), suivi du dépôt des composants de réserve personnalisés (R^{p}) dans les alvéoles faisant l'objet d'un remplissage spécifique, de manière à ce que l'ordre de positionnement des composants personnalisés soit respecté,
n) une étape de répétition des étapes i à m pour chaque direction de la matrice de logements (610) du support d'accueil (6),
o) une étape de répétition des étapes précédentes, pour tous les supports d'accueil (6) solidaires du plateau tournant (5).

34. Procédé de personnalisation selon l'une quelconque des revendications 26 à 32, **caractérisé en ce que**, lorsqu'il y a plus de composants défectueux (*) que de composants de réserve (R) dans la matrice de logements (610) d'un support d'accueil (6), le procédé comprend à la suite de l'étape de vérification :
e) une étape de lecture de l'identifiant et/ou des coordonnées mémorisées correspondant aux composants détectés comme défectueux (*) dans un premier support d'accueil (6) par les moyens d'acquisition d'images (51) et/ou les moyens informatiques (3),
f) une étape de personnalisation des composants de réserve présents dans la matrice de logements (610), par le dispositif de personnalisation électrique (50) et/ou le poste de gravure (52) piloté(s) par les moyens informatiques (3), une partie des composants défectueux (*) du premier support d'accueil (6) n'étant pas remplacée faute d'un nombre suffisant de composants de réserve dans le premier support d'accueil (6),
g) une étape de déplacement du poste de gravure (52) et/ou du dispositif de personnalisation électrique (50), mis en oeuvre par les moyens informatiques (3) pilotant les moyens de déplacement desdits poste et dispositif, ces derniers s'éloignant du premier support d'accueil (6) comprenant les composants personnalisés (P),
h) une étape de mise en mouvement du plateau tournant (5) mis en oeuvre par les moyens de déplacement du plateau tournant pilotés par les moyens informatiques (3), suivi de l'arrêt du mouvement du plateau tournant lorsque les coordonnées de la position du premier support d'accueil (6), suivie par les moyens informatiques, correspondent aux coordonnées de la zone de chargement/déchargement de composants enregistrées dans une zone mémoire des moyens informatiques de façon que les moyens de transport (4), pilotés par les moyens informatiques (3), puissent accéder à la matrice de logements du support d'accueil (6),
i) une étape de chargement des composants (P) personnalisés et des composants de réserve personnalisés (R^{p}) du premier support d'accueil (6) dans les alvéoles (20) du système de sortie (2), par les moyens de transports (4) pilotés par les moyens informatiques (3) opérant en plusieurs étapes successives selon des directions parallèles par rapport à la ligne ou la colonne de matrice, de manière à ce que l'ordre de positionnement des composants personnalisés (P, R^{p}) soit respecté dans le système de sortie (2), les composants détectés comme défectueux (*) étant à chaque étape transportés et jetés par les moyens de transport (4) dans au moins un bac (70) du poste de rejet (7), les composants personnalisés du premier support d'accueil (6) ordonnés selon un positionnement postérieur au premier composant défectueux (*), n'ayant pu être remplacés par un composant de réserve du premier support d'accueil (6), étant chargés par étapes successives dans des directions parallèles dans les alvéoles (80) de la zone de stockage temporaire (8),
j) une étape de chargement du premier support d'accueil (6) en composants (C) provenant du système d'entrée (1), par les moyens de transports (4) pilotés par les moyens informatiques (3) opérant en plusieurs étapes successives selon des directions parallèles par rapport à la ligne ou la colonne de matrice,
k) une étape de mise en mouvement du plateau tournant (5) mis en oeuvre par les moyens de déplacement du plateau tournant pilotés par les moyens informatiques (3), suivi de l'arrêt du mouvement du plateau tournant lorsque les coordonnées de la position d'un second support d'accueil (6), suivie par les moyens informatiques, correspondent aux coordonnées du poste de gravure (52) et/ou du dispositif de personnalisation électrique (50) enregistrées dans une zone mémoire des moyens informatiques, de façon que lesdits postes puissent accéder à la matrice de logements du second support d'accueil (6),
1) une étape de personnalisation par les moyens informatiques (3) des composants du second support d'accueil (6), un certain nombre de composants recevant les informations de personnalisation initialement prévue pour chaque composant défectueux (*) du premier support d'accueil (6), n'ayant pas pu être remplacé, du premier support d'accueil (6),
m)une étape de déplacement du poste de gravure (52) et/ou du dispositif de personnalisation électrique (50), mis en oeuvre par les moyens informatiques (3) pilotant les moyens de déplacement desdits poste et dispositif, ces derniers s'éloignant du second support d'accueil (6) comprenant les composants personnalisés,
n) une étape de mise en mouvement du plateau tournant (5) mis en oeuvre par les moyens de déplacement du plateau tournant pilotés par les moyens informatiques (3), suivi de l'arrêt du mouvement du plateau tournant lorsque les coordonnées de la position du second support d'accueil (6), suivie par les moyens informatiques, correspondent aux coordonnées de la zone de chargement/déchargement de composants enregistrées dans une zone mémoire des moyens informatiques de façon que les moyens de transport (4), pilotés par les moyens informatiques (3), puissent accéder à la matrice de logements du second support d'accueil (6),
o) une étape de chargement par les moyens de transports (4) des composants personnalisés du second support d'accueil (6), ayant reçu les informations de personnalisation initialement prévue pour chaque composant défectueux (*) n'ayant pas pu être remplacé du premier support d'accueil (6), dans les alvéoles (20) faisant l'objet d'un remplissage spécifique du système de sortie (2) de manière à ce que l'ordre de positionnement des composants personnalisés soit respecté,
p) une étape de déplacement des composants et composants de réserve personnalisés (P, R^{p}) dans le premier support d'accueil (6), le déplacement étant réalisé par les moyens de transport (4) par étapes successives selon des directions parallèles, depuis la zone de stockage temporaire (8) vers le système de sortie (2) de manière à ce que l'ordre de positionnement des composants personnalisés soit respecté,
q) une étape de chargement des composants personnalisés restants du second support d'accueil (6) vers la zone de sortie (2), par étapes successives dans des directions parallèles, de manière à ce que l'ordre de positionnement des composants personnalisés soit respecté.

## Patentansprüche

1. System zur Personalisierung von elektronischen Komponenten, **dadurch gekennzeichnet, dass** es Folgendes umfasst:
- wenigstens einen Drehteller (5) in einer Ebene (x, y) mit einer kreisförmigen Bewegung, erzielt durch Bewegungsmittel, die von Informatikmitteln (3) gesteuert werden, wobei der Drehteller mit wenigstens einer Auflage (6) einstückig ausgebildet ist, der eine Aufnahmematrix (610) mit n Reihen und n Spalten umfasst, wobei die Aufnahmen (610) jeweils zum Aufnehmen einer elektronischen Komponente bestimmt sind, wobei die Informatikmittel (3) die Koordinaten der Position jeder Auflage (6) erhalten, die in einem Speicherraum von Informatikmitteln (3) gespeichert sind, wobei es dadurch die Verfolgung dieser Auflagen (6) gewährleistet,
- wenigstens ein System zum Bereitstellen von elektronischen Komponenten tangential zu dem Drehteller,
- wenigstens eine wenigstens elektrische Personalisierungsvorrichtung (50) mit oder ohne Kontakt, angeordnet auf der Bahn jeder Auflage, wobei die elektrische Personalisierungsvorrichtung das Personalisieren der elektronischen Komponenten einer selben Auflage gewährleistet, wobei die Komponenten jeder Auflage (6) fest mit dem Drehteller (5) verbunden wenigstens elektrisch aufeinander folgend personalisiert werden,
- wenigstens eine Rückweisungsstation (7), die wenigstens einen Behälter (70) umfasst, und eine Matrixzone, die mehrere Zellen zum Zwischenlagern (8) von Komponenten umfasst, wobei die Rückweisungsstation (7) und die Zwischenlagerzone (8) auf der einen oder der anderen Seite des Drehtellers (5) positioniert werden können,
- Informatikmittel (3) zum Positionieren und Bewegen von Transportmitteln, Steuern des Ergreifens und Transportierens von mehreren in Richtung y ausgerichteten Komponenten, wobei sich die Transportmittel (4) entlang einer senkrechten Achse in der Richtung x zwischen der Zwischenlagerzone (8), der Rückweisungsstation (7), dem Bereitstellungssystem (1, 2) und der Aufnahmematrix jeder Auflage (6) bewegen, die von dem Drehteller (5) den Transportmitteln vorgelegt wird.

2. Personalisierungssystem nach dem vorherigen Anspruch, **dadurch gekennzeichnet, dass** die elektrische Personalisierungsvorrichtung (50) eine Personalisierungsvorrichtung mit Kontakt ist, die leitende Anschlüsse (501) umfasst und mit Mitteln zum Bewegen in einer Richtung senkrecht zum Teller (5) fest verbunden ist, pilotgesteuert durch die Informatikmittel (3), wobei jeder Anschluss (501) der elektrischen Personalisierungsvorrichtung an jeder Kontaktstelle von elektronischen Komponenten abgeschlossen werden kann, die sich in den Aufnahmen (610) einer Auflage befinden, wenn der Drehteller (5) nicht in Rotation ist.

3. Personalisierungssystem nach Anspruch 1, **dadurch gekennzeichnet, dass** die elektrische Personalisierungsvorrichtung (50) eine kontaktlose Personalisierungsvorrichtung ist, die mehrere Funkfrequenzantennen umfasst und die mit Mitteln zum Bewegen in einer Richtung senkrecht zum Teller (5) fest verbunden sind, pilotgesteuert durch die Informatikmittel (3), wobei jede Antenne der kontaktlosen Personalisierungsvorrichtung kontaktlos mit einer Mikroschaltung von elektronischen Komponenten verbunden werden kann, die sich in den Aufnahmen (610) einer Auflage (6) befinden.

4. Personalisierungssystem nach einem der Ansprüche 1 bis 3, **dadurch gekennzeichnet, dass** das Personalisierungssystem eine elektrische Personalisierungsvorrichtung mit Kontakt und eine kontaktlose elektrische Personalisierungsvorrichtung umfasst, die gegenüber einer selben Auflage (6) auf beiden Seiten des Drehtellers (5) angeordnet sind, wobei es elektronische Komponenten einer selben Auflage (6) personalisiert, wobei diese Komponenten wenigstens eine elektrisch mit den Kontaktstellen verbundene Mikroschaltung und wenigstens eine Mikroschaltung umfassen, die mit Funkfrequenzwellen personalisiert werden kann, wobei die verschiedenen Mikroschaltungen gleichzeitig oder sequentiell personalisiert werden können.

5. Personalisierungssystem nach einem der Ansprüche 1 bis 3, **dadurch gekennzeichnet, dass** das Personalisierungssystem eine Personalisierungsvorrichtung mit Kontakt und eine kontaktlose Personalisierungsvorrichtung umfasst, die gegenüber zwei verschiedenen Auflagen (6) angeordnet sind, wobei die Komponenten jeder mit dem Drehteller (5) fest verbundenen Auflage (6) elektrisch aufeinander folgend personalisiert werden.

6. Personalisierungssystem nach einem der vorherigen Ansprüche, **dadurch gekennzeichnet, dass** es eine Anordnung zum Erkennen der Position, auf jeder Auflage (6), jeder zu personalisierenden und/oder in Personalisierung befindlichen und/oder Personalisierten Komponente umfasst.

7. Personalisierungssystem nach einem der Ansprüche 1 bis 2, **dadurch gekennzeichnet, dass** jede Aufnahme (610) einer Auflage (6) wenigstens eine Kontaktinsel (600) umfasst, deren Konfiguration dieser der Kontaktstellen der in die Aufnahme eingeführten Komponente entspricht, die in die Aufnahme eingeführt wurde, wobei die Kontaktinseln (600) mit den Leitern (601) einer Schnittstellenkarte (60) verbunden sind, die in jeder Auflage enthalten ist, wobei die Schnittstellenkarte (60) Anschlüsse (602) umfasst, die mit den Leitern (601) dieser Karte einer Auflage (6) verbunden sind, um die elektrische Personalisierung von in den Aufnahmen (610) einer Auflage befindlichen Komponenten durch die Informatikmitteln (3) zu ermöglichen.

8. Personalisierungssystem nach einem der Ansprüche 1 bis 2, **dadurch gekennzeichnet, dass** jede Aufnahme (610) einer Auflage (6) eine Öffnung (6100) umfasst, deren Ränder jede in jeder Aufnahme (610) der Auflage (6) vorhandene Komponente festhalten, wobei die Informatikmittel die Mittel zum Bewegen der elektrischen Personalisierungsvorrichtung so pilotsteuern, dass die leitenden Anschlüsse der elektrischen Personalisierungsvorrichtung mit den Kontaktstellen jeder Komponente verbunden werden können, die sich in der Auflage mit der elektrischen Personalisierungsvorrichtung (50) befindet.

9. Personalisierungssystem nach einem der vorherigen Ansprüche, **dadurch gekennzeichnet, dass** es eine Prägestation (52) umfasst, die auf der Bahn jeder Auflage (6) angeordnet ist, die wenigstens Mittel zum Prägen und/oder Abheben von Materien umfasst, so ausgelegt, dass sie gegenüber wenigstens einer Auflage (6) bewegt werden können, wobei die Präge- und/oder Materialabhubmittel und die die Bewegung gewährleistende Anordnung von den Informatikmitteln (3) pilotgesteuert werden.

10. Personalisierungssystem nach dem vorherigen Anspruch, dadurch gekenntzeichnet, dass die Prägestation eine Bilderfassungsvorrichtung (51) umfasst, die von den Informatikmitteln (3) pilotgesteuert wird, mit der die von den Präge- und/oder Materialabhubmitteln vorgebrachten Prägungen gesteuert werden können, wobei wenigstens ein Bild von grafischen Informationen in einer Speicherzone der Informatikmittel in Verbindung mit der Kennung der mit ihrer Position identifizierten Komponente assoziiert ist, wobei ein von den Informatikmitteln ausgeführter Algorithmus einen Vergleich zwischen den von dem Bilderfassungsmittel (51) erfassten Prägungen und den in einer Speicherzone von Informatikmitteln (3) gespeicherten grafischen Informationen durchführt.

11. Personaiisierungssystem nach einem der Ansprüche 1 bis 6 und 8 bis 10, **dadurch gekennzeichnet, dass** die Informatikmittel (3) die fest mit der elektrischen Personalisierungsvorrichtung (50) verbundenen Bewegungsmittel pilotsteuern, so dass die leitenden Anschlüsse (501) der elektrischen Personalisierungsvorrichtung direkt mit den Kontaktstellen von elektronischen Komponenten verbunden werden können, die sich in den Aufnahmen (610) einer Auflage (6) befinden, so dass die Komponenten von den Informatikmitteln (3) elektrisch indivualisiert werden können, wobei die Prägestation (52) gegenüber der elektrischen Personalisierungsstation (50) der anderen Seite des Drehtellers (5) angeordnet ist.

12. Personalisierungssystem nach einem der vorherigen Ansprüche, **dadurch gekennzeichnet, dass** es eine Druckfolgeplatte (500) umfasst, die eine Anordnung umfasst, die von den Informatikmitteln (3) zum Bewegen in einer Richtung senkrecht zum Drehteller (5) pilotgesteuert wird, um die Komponenten im Laufe ihrer Personalisierung in den für diesen Zweck vorgesehenen Aufnahmen zu halten.

13. Personalisierungssystem nach einem der vorherigen Ansprüche, **dadurch gekennzeichnet, dass** die Informatikmittel (3) die Informationen lesen, die in einer Speicherzone von Komponenten integriert sind, die mit der elektrischen Personalisierungsvorrichtung (50) verbunden und personalisiert sind, um die Integrität der in einer Speicherzone jeder Komponente gespeicherten Daten zu verifizieren.

14. Personalisierungssystem nach dem vorherigen Anspruch, **dadurch gekennzeichnet, dass** die Druckfolgeplatte (500) wenigstens eine Öffnung (502) aufweist, um die Durchführung von Komponentenprägevorgängen zu ermöglichen.

15. Personalisierungssystem nach einem der vorherigen Ansprüche, **dadurch gekennzeichnet, dass** es ein Eingabesystem (1) und ein Ausgabesystem (2) umfasst, die unabhängig gesteuert werden, wobei die Systeme jeweils wenigstens eine Bilderfassungsvorrichtung (11, 21) umfassen, pilotgesteuert durch die Informatikmittel (3), die es ermöglicht, die An- oder Abwesenheit von Komponenten in den Zellen (10, 20) des Ein- und des Ausgabesystems zu kontrollieren.

16. Personalisierungssystem nach einem der vorherigen Ansprüche, **dadurch gekennzeichnet, dass** ein Benutzer mit den Informatikmitteln (3) über eine Mensch/Maschine-Schnittstelle interagieren kann, um den Betrieb dieses Systems zu stoppen, um die personalisierten und/oder zu personalisierenden oder/oder in Personalisierung befindlichen elektronischen Komponenten zu verifizieren.

17. Personalisierungssystem nach einem der vorherigen Ansprüche, **dadurch gekennzeichnet, dass** die Bilderfassungsmittel (51) und/oder die Informatikmittel (3) wenigstens einen Personalisierungsfehler von wenigstens einer Komponente erkennen, wobei die von den Informatikmitteln pilotgesteuerten Transportmittel wenigstens die defekte Komponente (*) ergreifen, sie transportieren und sie in der Rückweisungsstation (7) deponieren.

18. Personalisierungssystem nach dem vorherigen Anspruch, **dadurch gekennzeichnet, dass** die Rückweisungsstation (7) mehrere Behälter (70) umfasst, wobei jeder Behälter defekte Komponenten (*) gemäß einem von den Bilderfassungsmitteln (51) und/oder den Informatikmitteln (3) erkannten Fehlertyp lagert.

19. Personalisierungssystem nach einem der vorherigen Ansprüche, **dadurch gekennzeichnet, dass** jede Auflage (6) wenigstens eine elektronische Reservekomponente umfasst, wobei eine bestimmte Anzahl von Reservekomponenten zum Ersetzen einer bestimmten Anzahl von defekten Komponenten (*) personalisiert wird, erkannt von den Informatikmitteln (3), wobei die Kennung und die Positionierungsfolge der auf dem Ausgabesystem (2) jeder defekten Komponente (*) durch die Informatikmittel mit der Position einer entsprechenden Reservekomponente assoziiert werden, die benutzt und mit der Kennung und den Daten der defekten Komponente (*) personalisiert wird.

20. Personalisierungssystem nach einem der vorherigen Ansprüche, **dadurch gekennzeichnet, dass** die Informatikmittel (3) die Positionierungsfolge auf dem Ausgabesystem (2) und die Kennung jeder personalisierten Komponente benutzen, gespeichert in einer Speicherzone der Informatikmittel (3), damit die Transportmitteln (4), durch die Informatikmittel pilotgesteuert, jede Komponente in dem Ausgabesystem (2) des Personalisierungssystems in einer präzisen Reihenfolge deponieren, wobei die Reihenfolge der Deponierung von Komponenten in einer Speicherzone der Informatikmittel (3) gespeichert wird.

21. Personalisierungssystem nach einem der vorherigen Ansprüche, **dadurch gekennzeichnet, dass** die Transportmittel (4), von den Informatikmitteln (3) pilotgesteuert, wenigstens eine personalisierte Komponente vor dem Reintegrieren dieser Komponenten im Ausgabesystem (2) des Personalisierungssystems gemäß einer in einer Speicherzone der Informatikmittel gespeicherten Reihenfolge in einer Zwischenlagerzone (8) deponieren.

22. Personalisierungssystem nach einem der Ansprüche 1 bis 21, **dadurch gekennzeichnet, dass** die Zwischenlagerzone (8) eine Funktion als Eingabe- und/oder Ausgabe- und/oder Zwischenlagersystem von personalisierten Komponenten hat.

23. Personalisierungssystem nach einem der vorherigen Ansprüche, **dadurch gekennzeichnet, dass** die Aufnahmematrix (610) einer Auflage (6) eine Aufnahmereihe (610) umfasst, die Mittel zum Ausrichten von elektronischen Komponenten umfasst, in denen die Komponenten von den durch die Informatikmittel pilotgesteuerten Transportmitteln deponiert werden, wobei die Komponenten nach dem Ausrichten von den Transportmitteln (4) in einer anderen Reihe der Aufnahmematrix (610) derselben Auflage in Erwartung der Personalisierung der Komponenten ergriffen und deponiert werden.

24. Personalisierungsverfahren von elektronischen Komponenten, ausgeführt von einem Personalisierungssystem nach Anspruch 1, **dadurch gekennzeichnet, dass** es Folgendes umfasst:
a) einen Schritt des Deponierens von zu personalisierenden elektronischen Komponenten in den Aufnahmen (610) einer Auflage (6), solange es wenigstens eine leere Aufnahme (610) gibt, wobei die Aufnahmematrix (610) durch aufeinander folgende Schritte in parallelen Richtungen gefüllt wird,
b) einen Schritt des Inbewegungversetzens des Drehtellers (5) durch die Bewegungsmittel des Drehtellers, pilotgesteuert durch die Informatikmittel (3), so dass die Auflage (6), die die Komponenten umfasst, gegenüber der elektrischen Personalisierungsvorrichtung (50) platziert wird,
c) einen Schritt des Platzierens der elektrischen Personalisierurrgsvorrichtung (50) durch die Informatikmittel (3), so dass die leitenden Anschlüsse (501) der Vorrichtung mit den Kontakttellen der Komponenten verbunden werden, die sich in den Aufnahmen (610) der Auflage (6) befinden,
d) einen Schritt des wenigstens elektrischen Personalisierens von Komponenten durch die Informatikmittel (3), wobei wenigstens ein Programm und/oder wenigstens ein Datenelement in einer Speicherzone jeder elektronischen Komponente integriert ist, die mit der wenigstens elektrischen Personalisierungsvorrichtung (5) verbunden ist,
e) einen Schritt des Bewegens der wenigstens elektrischen Personalisierungsvorrichtung (50), ausgeführt durch die Informatikmittel (3), die die Bewegungsmittel der Vorrichtung pilotsteuern, wobei sich diese von der Auflage (6) entfernt, die die elektrisch persanalisierten Komponenten umfasst,
f) einen Schritt des Inbewegungversetzens des Drehtellers (5), ausgeführt durch die Bewegungsmittel des Drehtellers, pilotgesteuert durch die Informatikmittel (3), so dass die Transportmittel (4) auf die Aufnahmematrix (610) der Auflage (6) zugreifen können, die die personalisierten Komponenten (P) umfasst,
g) einen Schritt des Abnehmens der personalisierten Komponenten von jeder Auflage (6) durch die Transportmittel (4), pilotgesteuert durch die Informatikmittel (3), die in mehreren aufeinander folgenden Schritten in Richtungen parallel zu der Matrixreihe oder -spalte arbeiten,
h) einen Schritt des Wiederholens der vorhergehenden Schritte für alle mit dem Drehteller (5) fest verbundenen Auflagen (6).

25. Personalisierungsverfahren nach dem vorherigen Anspruch, **dadurch gekennzeichnet, dass** Schritt a) des Deponierens von elektronischen Komponenten in den Aufnahmen einer Auflage die folgenden Schritte umfasst:
a) einen Schritt des Bewegens des Drehtellers (5), ausgeführt durch die Bewegungsmittel, gesteuert durch die Informatikmittel (3), gefolgt vom Stoppen der Bewegung des Drehtellers an den Koordinaten der Position einer Auflage (6), gefolgt von den Informatikmitteln, die den Koordinaten einer Komponentenlade-/-entladezone entsprechen, die in einer Speicherzone von Informatikmitteln gespeichert sind, so dass die Transportmittel (4), durch die Informatikmittel (3) pilotgesteuert, auf die Aufnahmematrix der Auflage (6) zugreifen können,
b) einen Schritt des Ergreifens von mehreren elektronischen Komponenten durch Transportmittel (4), pilotgesteuert durch die Informatikmittel (3), von dem Eingabesystem (1), das nicht personalisierte Komponenten umfasst,
c) einen Schritt des gleichzeitigen Deponierens jeder von den Transportmitteln (4) erfassten Komponente in einer jeweiligen Aufnahme (610) der Auflage (6), wobei jede Aufnahme (610) eine einzige Komponente umfasst, wobei die in diesem Schritt gefüllten Aufnahmen zu einer selben Richtung der Matrix gehören,
d) einen Schritt des Wiederholens der Schritte b) und c), solange es wenigstens eine leere Aufnahme (610) gibt, wobei die Aufnahmematrix (610) durch aufeinander folgende Schritte in parallelen Richtungen gefüllt wird.

26. Personalisierungsverfahren nach Anspruch 24, **dadurch gekennzeichnet, dass** Schritt g) des Abnehmens von elektronischen Komponenten die folgenden Schritte umfasst:
a) einen Schritt des Ergreifens durch die Transportmittel (4), pilotgesteuert durch die Informatikmittel (3), von personalisierten Komponenten (P), die sich in einer Reihe der Aufnahmematrix (610) der Auflage (6) befinden,
b) einen Schritt des Deponierens von von den Transportmitteln (4) ergriffenen personalisierten Komponenten auf dem Ausgabesystem (2) zum Zurückgewinnen einer Gruppe von ausgerichteten personalisierten Komponenten,
c) einen Schritt des Wiederholens der Schritte a) und b), um die Aufnahmen (610) von personalisierten Komponenten zu entleeren, wobei die Aufnahmematrix (610) durch aufeinander folgende Schritte gemäß parallelen Richtungen geleert wird.

27. Personalisierungsverfahren nach einem der Ansprüche 24 bis 26, dadurch gekenntzeichnet, dass die Schritte a) und g) des Deponierens und Abnehmens von elektronischen Komponenten aufeinander folgend für jede Richtung einer Aufnahmematrix (610) einer Auflage (6) realisiert werden, so dass jede Richtung der Aufnahmematrix Runde für Runde von den Transportmitteln (4) von personalisierten Komponenten (P) entledigt und dann mit vom Eingabesystem (1) kommenden frischen Komponenten durch die Transportmittel (4) gefüllt werden, pilotgesteuert durch die Informatikmittel (3).

28. Personalisierungsverfahren nach einem der Ansprüche 24 bis 27, **dadurch gekennzeichnet, dass** es einen Schritt des Zuordnens, durch die Informatikmittel (3), einer Kennung und einer Positionierungsfolge auf dem Ausgabesystem (2) bei jeder personalisierten elektronischen Komponente (P) umfasst, wobei diese Kennung, die Positionierungsfolge und die Koordinaten der Position jeder Komponente in einer Aufnahme (610) in einem Speicherraum von Informatikmitteln (3) gespeichert werden, so dass die personalisierten Komponenten durch die Transportmittel (4) in dem Ausgabesystem (2) in Schritt k) in einer präzisen Reihenfolge deponiert werden.

29. Personalisierungsverfahren nach einem der Ansprüche 24 bis 28, **dadurch gekennzeichnet, dass** es einen Schritt des grafischen Personalisierens beinhaltet, realisiert durch Prägungsmittel, die in einer Prägestation (52) enthalten sind und von den Informatikmitteln (3) pilotgesteuert werden.

30. Personalisierungsverfahren nach den Ansprüchen 24 bis 29, **dadurch gekennzeichnet, dass** die elektrischen und grafischen Personalisierungsschritte für Komponenten, die sich in einer selben Auflage (6) befinden, gleichzeitig durchgeführt werden.

31. Personalisierungsverfahren nach einem der Ansprüche 24 bis 30, **dadurch gekennzeichnet, dass** es einen Schritt des Verifizierens von elektrischen und/oder grafischen Personalisierungsinformationen umfasst, realisiert durch die Bilderfassungsmittel (51) und/oder die Informatikmittel (3).

32. Personalisierungsverfahren nach einem der Ansprüche 24 bis 31, **dadurch gekennzeichnet, dass** es einen Schritt des Verifizierens von personalisierten und/oder zu personalisierenden und/oder in Personalisierung befindlichen elektronischen Komponenten (P) umfasst, realisiert durch einen Benutzer, wobei der Benutzer mit den Informatikmitteln (3) über eine Mensch/Maschine-Schnittstelle interagieren kann, um den Betrieb des Personalisierungssystems zu stoppen.

33. Personalisierungsverfahren nach einem der Ansprüche 24 bis 32, **dadurch gekennzeichnet, dass** es nach dem Personalisierungsschritt d) einen Schritt des Verifizierens durch die Bilderfassungsmittel (51) und/oder die Informatikmittel (3) zum Erkennen von Personalisierungsfehlern beinhaltet, wobei die Zahl der defekten Komponenten (*) die Zahl der in der Aufnahmematrix (610) der Auflage (6) befindlichen Reservekomponenten nicht übersteigt, wobei auf den Verifizierungsschritt wenigstens die folgenden Schritte folgen:
e) ein Schritt des Lesens der Kennung und/oder der gespeicherten Koordinaten entsprechend den Komponenten, die von den Bilderfassungsmitteln (51) und/oder den Informatikmitteln (3) als defekt (*) erkannt wurden,
f) ein Schritt des Personalisierens von Reservekomponenten, die sich in der Aufnahmematrix (610) befinden, durch die elektrische Personalisierungsvorrichtung (50) und/oder die Prägestation (52), pilotgesteuert durch die Informatikmittel (3), wobei jede Reservekomponente anfänglich für jede defekte Komponente (*) vorgesehene Personalisierungsinformationen empfängt,
g) ein Schritt des Bewegens der Prägestation (52) und/oder der elektrischen Personalisierungsvorrichtung (50), durchgeführt durch die Informatikmittel, die die Bewegungsmittel dieser Station und Vorrichtung pilotsteuern, wobei sich diese von der die indivdiualisierten Komponenten (5) umfassenden Auflage (6) entfernen,
h) ein Schritt des Inbewegungversetzens des Drehtellers (5), ausgeführt durch die Bewegungsmittel des Drehtellers, der von den Informatikmitteln (3) pilotgesteuert wird, gefolgt vom Stoppen der Bewegung des Drehtellers, wenn die Koordinaten der Position der ersten Auflage (6), gefolgt von den Informatikmitteln, den Koordinaten der Komponentenlade-/-entladezone entsprechen, die in einer Speicherzone der Informatikmittel gespeichert sind, so dass die Transportmittel (4), pilotgesteuert durch die Informatikmittel (3), auf die Aufnahmematrix der Auflage (6) zugreifen können,
i) ein Schritt des Ergreifens, durch die Transportmittel (4), pilotgesteuert durch die Informatikmittel (3), von personalisierten Komponenten (P), die sich in einer Richtung der Aufnahmematrix (610) der Auflage (6) befinden,
j) ein Schritt des Bewegens der Transportmittel (4) zu der Rückweisungsstation (71, gefolgt von der Rückweisung der defekten Komponente(n) (*) unter den von den Transportmitteln (4) ergriffenen Komponenten,
k) ein Schritt des Bewegens der Transportmittel (4) zum Ausgabesystem (2), gefolgt vom Deponieren von personalisierten Komponenten in den Zellen (20) des Ausgabesystems (2), wobei jede Zelle gerade eine defekte Komponente (*) aufgenommen hat, die Gegenstand einer spezifischen Füllung ist,
1) ein Schritt des Bewegens von Transportmitteln (4) zum Ort von wenigstens einer Reservekomponente, die sich in der Aufnahmematrix (610) der Auflage (6) befindet, gefolgt vom Ergreifen der personalisierten Reservekomponente(n) und im Austausch gegen die defekten Komponenten (*) , wobei jede Reservekomponente eine defekte Komponente (*) ersetzt, wobei dieser Schritt 1) unterschiedslos vor oder nach Schritt k) ausgeführt werden kann,
m) ein Schritt des Bewegens von Transportmitteln (4) zum Ausgabesystems (2), gefolgt vom Deponieren von personalisierten Reservekomponenten (R^{P}) in den Zellen, die Gegenstand einer spezifischen Füllung sind, auf eine solche Weise, dass die Positionierungsfolge von personalisierten Komponenten eingehalten wird,
n) ein Schritt des Wiederholens der Schritte i) bis m) für jede Richtung der Aufnahmematrix (610) der Auflage (6),
o) ein Schritt des Wiederholens von vorhergehenden Schritten für alle fest mit dem Drehteller (5) verbundenen Auflagen (6).

34. Personalisierungsverfahren nach einem der Ansprüche 26 bis 32, **dadurch gekennzeichnet, dass**, wenn es mehr defekte Komponenten (*) als Reservekomponenten (R) in der Aufnahmematrix (610) einer Auflage (6) gibt, das Verfahren nach dem Verifizierungsschritt die folgenden Schritte umfasst:
e) einen Schritt des Lesens der Kennung und/oder der gespeicherten Koordinaten, die den Komponenten entsprechen, die in einer ersten Auflage (6) durch die Bilderfassungsmittel (51) und/oder die Informatikmittel (3) als defekt (*) erkannt wurden,
f) einen Schritt des Personalisierens von Reservekomponenten, die sich in der Aufnahmematrix (610) befinden, durch die elektrische Personalisierungsvorrichtung (50) und/oder die Prägestation (52), pilotgesteuert durch die Informatikmittel (3), wobei ein Teil der defekten Komponenten (*) der ersten Auflage (6) bei einer unzureichenden Anzahl von Reservekomponenten in der ersten Auflage (6) nicht ersetzt wird,
g) einen Schritt des Bewegens der Prägestation (52) und/oder der elektrischen Personalisierungsvorrichtung (50), ausgeführt durch die Informatikmittel (3), die die Mittel zum Bewegen der Station und Vorrichtung pilotsteuern, wobei sich diese von der die personalisierten Komponenten (P) umfassenden ersten Auflage (6) entfernen,
h) einen Schritt des Inbewegungversetzens des Drehtellers (5), ausgeführt durch die Mittel zum Bewegen des Drehtellers, pilotgesteuert durch die Informatikmittel (3), gefolgt vom Stoppen der Bewegung des Drehtellers, wenn die Koordinaten der Position der ersten Auflage (6), gefolgt von den Informatikmitteln, den Koordinaten der Komponentenlade-/-entladezone entsprechen, die in einer Speicherzone von Informatikmitteln gespeichert sind, so dass die Transportmittel (4), pilotgesteuert durch die Informatikmittel (3), auf die Aufnahmematrix der Auflage (6) zugreifen können,
i) einen Schritt des Ladens von personalisierten Komponenten (P) und von personalisierten Reservekomponenten (R^{P}) der ersten Auflage (6) in den Zellen (20) des Ausgabesystems (2) durch die Transportmittel (4), pilotgesteuert durch die Informatikmittel (3), die in mehreren aufeinander folgenden Schritten in parallelen Richtungen in Bezug auf die Reihe oder Spalte der Matrix arbeiten, auf eine solche Weise, dass die Positionierungsfolge der personalisierten Komponenten (P, R^{P}) in dem Ausgabesystem (2) eingehalten wird, wobei die als defekt erkannten Komponenten (*) bei jedem Schritt von den Transportmitteln (4) in wenigstens einen Behälter (70) der Rückweisungsstation (7) transportiert und geworfen werden, wobei die personalisierten Komponenten der ersten Auflage (6), eingeordnet gemäß einer Positionierung nach der ersten defekten Komponente (*), die nicht durch eine Reservekomponente der ersten Auflage (6) ersetzt werden konnten, durch aufeinander folgende Schritte in parallelen Richtungen in den Zellen (80) der Zwischenlagerzone (8) geladen werden,
j) einen Schritt des Ladens der ersten Auflage (6) in vom Eingabesystem (1) kommenden Komponenten (C) durch die Transportmittel (4), pilotgesteuert durch die Informatikmittel (3), die in mehreren aufeinander folgenden Schritten in Richtungen parallel in Bezug auf die Matrixreihe oder -spalte arbeiten,
k) einen Schritt des Inbewegungversetzens des Drehtellers (5), ausgeführt durch die Schritte des Bewegens des Drehtellers, pilotgesteuert durch die Informatikmittel (3), gefolgt vom Stoppen der Bewegung des Drehtellers, wenn die den Koordinaten der Position einer zweiten Auflage (6), gefolgt von den Informatikmitteln, den Koordinaten der Prägestation (52) und/oder der elektrischen Personalisierungsvorrichtung (50) entsprechen, gespeichert in einer Speicherzone von Informatikmitteln, auf eine solche Weise, dass die Stationen auf die Aufnahmematrix der zweiten Auflage (6) zugreifen können,
1) einen Schritt des Personalisierens, durch die Informatikmittel (3), von Komponenten der zweiten Auflage (6), wobei eine bestimmte Anzahl von Komponenten die Personalisierungsinformationen, die anfänglich für jede defekte Komponente (*) der ersten Auflage (6) vorgesehen sind, die nicht ersetzt werden konnten, von der ersten Auflage (6) erhält,
m) einen Schritt des Bewegens der Prägestation (52) und/oder der elektrischen Personalisierungsvorrichtung (50), ausgeführt durch die Informatikmittel (3), die die Mittel zum Bewegen der Station und der Vorrichtung pilotsteuern, wobei sich diese von der zweiten Auflage (6) entfernen, die die personalisierten Komponenten umfasst,
n) einen Schritt des Inbewegungversetzens des Drehtellers (5), ausgeführt durch die Mittel zum Bewegen des Drehtellers, pilotgesteuert durch die Informatikmittel (3), gefolgt vom Stoppen der Bewegung des Drehtellers, wenn die Koordinaten der Position der zweiten Auflage (6), gefolgt von den Informatikmitteln, den Koordinaten der Lade-/Entladezone von Komponenten entsprechen, die in einer Speicherzone der Informatikmittel gespeichert sind, auf eine solche Weise, dass die Transportmittel (4), die von den Informatikmitteln (3) pilotgesteuert werden, auf die Aufnahmematrix der zweiten Auflage (6) zugreifen können,
o) ein Schritt des Ladens, durch die Transportmittel (4), von personalisierten Komponenten der zweiten Auflage (6), die die anfänglichen Personalisierungsinformationen für jede defekte Komponente (*) erhalten haben, die nicht durch die erste Auflage (6) ersetzt werden konnten, in die Zellen (20), die Gegenstand einer spezifischen Füllung des Ausgabesystems (2) sind, auf eine solche Weise, dass die Positionierung der personalisierten Komponenten eingehalten wird,
p) einen Schritt des Bewegens von personalisierten Komponenten und Reservekomponenten (P, R^{P}) in der ersten Auflage (6), wobei die Bewegung durch die Transportmittel (4) durch aufeinander folgende Schritte in parallelen Richtungen von der Zwischenlagerzone (4) zum Ausgabesystem (2) auf eine solche Weise ausgeführt wird, dass die Positionierungsfolge der personalisierten Komponenten eingehalten wird,
q) einen Schritt des Ladens von verbleibenden personalisierten Komponenten von der zweiten Auflage (6) in die Ausgabezone (2), durch aufeinander folgende Schritte in parallelen Richtungen, auf eine solche Weise, dass dire Positionierungsfolge der personalisierten Komponenten eingehalten wird.

## Claims

1. System for customising electronic components, **characterised in that** it comprises:
- at least one turntable (5) in a plane (x, y) having a circular movement provided by movement means controlled by the data processing means (3), the turntable being integral with at least one receiving carrier (6) having a matrix of sockets (610) of n lines and m columns, the sockets (610) being designed to each receive an electronic component, the data processing means (3) receiving the co-ordinates of the position of each receiving carrier (6), recorded in a memory space of the data processing means (3), thus ensuring the monitoring of said receiving carriers (6),
- at least one system for supplying the electronic components, tangential to the turntable,
- at least one at least electrical customizing device (50) operating with or without contact, disposed on the path of each receiving carrier, the electrical customising device allowing the customisation of the electronic components of one and the same receiving carrier, the components of each receiving carrier (6) integral with the turntable (5) being successively customisable at least electrically,
- at least one reject station (7) comprising at least one bin (70), and a matrix zone including a plurality of receptacles for temporary storage (8) of components, the reject station (7) and the temporary storage zone (8) being capable of being positioned on one side or the other of the turntable (5),
- data processing means (3) for positioning and moving transport means, controlling the retrieval and the transport of a plurality of components aligned in the direction y, the transport means (4) moving along a perpendicular axis, in the direction x between the temporary storage zone (8), the reject station (7), the supply system (1, 2) and the matrix of sockets of each receiving carrier (6) presented by the turntable (5) to the transport means.

2. Customising system according to the preceding claim, **characterised in that** the electrical customising device (50) is a customising device operating with contact, including conducting terminals (501) and being integral with means of movement in a direction perpendicular to the turntable (5), piloted by the data processing means (3), each terminal (501) of the electrical customising device being connectable to each series of contacts of the electronic components present in the sockets (610) of a receiving carrier when the turntable (5) is immobile in rotation.

3. Customising system according to claim 1, **characterised in that** the electrical customising device (50) is a customising device operating without contact including a plurality of radio frequency antennas and being capable of being integrated with means of movement in a direction perpendicular to the turntable (5), piloted by the data processing means (3), each antenna of the customising device operating without contact being connectable without contact to a microcircuit of the electronic components present in the sockets (610) of a receiving carrier (6).

4. Customising system according to any one of claims 1 to 3, **characterised in that** the customising system comprises an electrical customising device operating with contact and an electrical customising device operating without contact disposed facing a same receiving carrier (6) on either side of the turntable (5), customising electronic components of one and the same receiving carrier (6), these components comprising at least one microcircuit connected electrically to the series of contacts and at least one microcircuit capable of being customised with radio frequency waves, the different microcircuits being capable of being customised simultaneously or sequentially.

5. Customising system according to any one of claims 1 to 3, **characterised in that** the customising system comprises a customising device operating with contact and a customising device operating without contact disposed facing two different receiving carriers (6), the components of each receiving carrier (6) integral with the turntable (5) being successively customisable electrically.

6. Customising system according to any one of the preceding claims, **characterised in that** it comprises an arrangement for recognising the position, on each receiving carrier (6), of each component which is to be customised and/or is being customised and/or has been customised.

7. Customising system according to any one of claims 1 to 2, **characterised in that** each socket (610) of a receiving carrier (6) includes at least one contact stud (600) the configuration of which corresponds to that of the series of contacts of the component introduced into the socket, the contact studs (600) being connected to the conductors (601) of an interface card (60) included in each receiving carrier, the interface card (60) including terminals (602) connected to the conductors (601) of said card of a receiving carrier (6) in such a way as to allow the electrical customisation of the components present in the sockets (610) of a receiving carrier by the data processing means (3).

8. Customising system according to any one of claims 1 to 2, **characterised in that** each socket (610) of a receiving carrier (6) comprises an opening (6100) the edges of which retain each component present in each socket (610) of the receiving carrier (6), the data processing means piloting the means for movement of the electrical customising device in such a way that the conducting terminals of said electrical customising device are connectable to the series of contacts of each component present in the receiving carrier with the electrical customising device (50).

9. Customising system according to any one of the preceding claims, **characterised in that** it comprises an etching station (52) disposed on the path of each receiving carrier (6), comprising at least means for etching and/or removing material arranged to be moveable facing at least one receiving carrier (6), the means for etching and/or removing material and the arrangement ensuring the movement being piloted by the data processing means (3).

10. Customising system according to the preceding claim, **characterised in that** the etching station comprises a device for acquiring images (51) piloted by the data processing means (3), making it possible to check the etchings produced by the means for etching and/or removing material, at least one image of the graphic information being recorded in a memory zone of the data processing means associated with the identifier of the component identified by its position, an algorithm applied by the data processing means making a comparison between the etchings acquired by the means for acquiring images (51) and the graphic information recorded in a memory zone of the data processing means (3).

11. Customising system according to any one of claims 1 to 6 and 8 to 10, **characterised in that** the data processing means (3) pilot the means of movement integrated in the electrical customising device (50), such that the conducting terminals (501) of said electrical customising device are directly connectable to the series of contacts of the electronic components present in the sockets (610) of a receiving carrier (6), in such a way as to allow the electrical customisation of said components by the data processing means (3), the etching station (52) being disposed facing the electrical customising station (50) on the other side of the turntable (5).

12. Customising system according to any one of the preceding claims, **characterised in that** it comprises a pressure plate (500) including an arrangement piloted by the data processing means (3) to move it in a direction perpendicular to the turntable (5), so as to hold the components in the sockets provided for that purpose in the course of the customisation of said components.

13. Customising system according to any one of the preceding claims, **characterised in that** the data processing means (3) read the information integrated in a memory zone of the components connected to the electrical customising device (50) and customised in such a way as to check the integrity of the data recorded in a memory zone of each component.

14. Customising system according to the preceding claim, **characterised in that** the pressure plate (500) comprises at least one opening (502) to allow the execution of the etching operations on the components.

15. Customising system according to any one of the preceding claims, **characterised in that** it comprises an input system (1) and an output system (2) which are controlled independently, said systems each comprising at least one device for acquiring images (11, 21) piloted by the data processing means (3), making it possible to check the presence or otherwise of components in the receptacles (10, 20) of the input and output systems.

16. Customising system according to any one of the preceding claims, **characterised in that** a user can interact with the data processing means (3) via a man/machine interface in such a way as to stop the operation of said system in order to check the electronic components which have been customised and/or are to be customised and/or are being customised.

17. Customising system according to any one of the preceding claims, **characterised in that**, if the means for acquiring images (51) and/or the data processing means (3) detect at least one error in customisation of at least one component, the transport means piloted by the data processing means retrieve at least the defective component (*), transport it and deposit it in the reject station (7).

18. Customising system according to the preceding claim, **characterised in that** the reject station (7) comprises a plurality of bins (70), each bin storing defective components (*) according to a type of fault detected by the means for acquiring images (51) and/or the data processing means (3).

19. Customising system according to any one of the preceding claims, **characterised in that** each receiving carrier (6) comprises at least one spare electronic component, a certain number of spare components being customised to replace a certain number of defective components (*) detected by the data processing means (3), the identifier and the order of positioning in the output system (2) of each defective component (*) being associated by the data processing means with the position of a corresponding spare component used and customised with the identifier and the data of the defective component (*).

20. Customising system according to any one of the preceding claims, **characterised in that** the data processing means (3) use the order of positioning in the outlet system (2) and the identifier of each customised component, recorded in a memory zone of the data processing means (3), so that the transport means (4), piloted by said data processing means, deposit each component in the output system (2) of the customising system in a precise order, the order of depositing of the components being recorded in a memory zone of the data processing means (3).

21. Customising system according to any one of the preceding claims, **characterised in that** the transport means (4), piloted by the data processing means (3), deposit at least one customised component in the temporary storage zone (8), before returning said components to the output system (2) of the customising system according to an order recorded in a memory zone of the data processing means.

22. Customising system according to any one of claims 1 to 21, **characterised in that** the temporary storage zone (8) has a function as an input system and/or an output system and/or a temporary storage system for customised components.

23. Customising system according to any one of the preceding claims, **characterised in that** the matrix of sockets (610) of a receiving carrier (6) comprises a line of sockets (610) including means for alignment of the electronic components in which the components are deposited by the transport means piloted by the data processing means, the components once aligned being retrieved and deposited by the transport means (4) in another line of the matrix of sockets (610) of the same receiving carrier in anticipation of the customisation of the components.

24. Method for customising electronic components implemented by a customising system according to claim 1, **characterised in that** it comprises:
a) a step for depositing electronic components to be customised in the sockets (610) of a receiving carrier (6) as long as there is at least one empty socket (610), the matrix of sockets (610) being filled in successive steps in parallel directions,
b) a step for setting the turntable (5) in motion implemented by the means for moving the turntable piloted by the data processing means (3), such that the receiving carrier (6) comprising the components is placed facing the electrical customising device (50),
c) a step for positioning of the electrical customising device (50) by the data processing means (3) such that the conducting terminals (501) of said device are connected to the series of contacts of the components present in the sockets (610) of the receiving carrier (6),
d) a step for at least electrical customising of the component(s) implemented by the data processing means (3), at least one programme and/or at least one item of data being integrated in a memory zone of each electronic component connected to the at least electrical customising device (50),
e) a step for moving the at least electrical customising device (50), implemented by the data processing means (3) piloting the means of movement of said device, the latter moving away from the receiving carrier (6) comprising the electrically customised components,
f) a step for setting the turntable (5) in motion implemented by the means of movement of the turntable piloted by the data processing means (3), such that the transport means (4) are able to access the matrix of sockets (610) of the receiving carrier (6) comprising the customised components (P),
g) a step for discharging of the customised components from each receiving carrier (6) by the transport means (4) piloted by the data processing means (3) operating in a plurality of successive steps in parallel directions in relation to the line or column of the matrix,
h) a step for repeating the preceding steps for all the receiving carriers (6) integral with the turntable (5).

25. Customising method according to the preceding claim, **characterised in that** the step (a) for depositing electronic components in the sockets of a receiving carrier comprises the following steps:
a) a step for moving the turntable (5) implemented by the movement means controlled by the data processing means (3), followed by the stopping of the movement of the turntable when the co-ordinates of the position of a receiving carrier (6), monitored by the data processing means, correspond to the co-ordinates of a zone for charging/discharging of components recorded in a memory zone of the data processing means such that the transport means (4), piloted by the data processing means (3), are able to access the matrix of sockets of the receiving carrier (6).
b) a step for retrieval of a plurality of electronic components by the transport means (4), piloted by the data processing means (3), from the input system (1) comprising components which have not been customised,
c) a step for simultaneously depositing each component retrieved by the transport means (4) in a respective socket (610) of the receiving carrier (6), each socket (610) comprising a single component, the sockets filled in this step belonging to one and the same direction of the matrix,
d) a step for repeating the steps b) and c) as long as there is at least one empty socket (610), the matrix of sockets (610) being filled in successive steps in parallel directions.

26. Customising method according to claim 24, **characterised in that** the step g) for discharging electronic components comprises the following steps:
a) a step for retrieval by the transport means (4), piloted by the data processing means (3), of the customised components (P) present in a line of the matrix of sockets (610) of the receiving carrier (6),
b) a step for depositing the customised components retrieved by the transport means (4) in the output system (2) designed to recover a group of aligned customised components,
c) a step for repeating steps a) and b) so as to empty the sockets (610) of the customised components, the matrix of sockets (610) being emptied in successive steps in parallel directions.

27. Customising method according to any one of claims 24 to 26, **characterised in that** the steps a) and g) for depositing and discharging electronic components are carried out successively in each direction of a matrix of sockets (610) of a receiving carrier (6), such that each direction of the matrix of sockets is in turn emptied of customised components (P) by the transport means (4) piloted by the data processing means (3), then filled with virgin components from the input system (1) by the transport means (4) piloted by the data processing means (3).

28. Customising method according to any one of claims 24 to 27, **characterised in that** it comprises a step for assignment by the data processing means (3) of an identifier and an order of positioning in the output system (2) to each customised electronic component (P), said identifier, the order of positioning and the co-ordinates of the position of each component in a socket (610) being recorded in a memory space of the data processing means (3), such that the customised components are deposited by the transport means (4) in the output system (2) in the step k) in a precise order.

29. Customising method according to any one of claims 24 to 28, **characterised in that** it comprises a step for graphic customisation carried out by etching means, included in an etching station (52) and piloted by the data processing means (3).

30. Customising method according to claims 24 to 29, **characterised in that** the steps for electrical and graphic customisation of the components present in one and the same receiving carrier (6) are carried out at the same time.

31. Customising method according to any one of claims 24 to 30, **characterised in that** it comprises a step for verifying the electrical and/or graphic customisation information, carried out by the means for acquiring images (51) and/or the data processing means (3).

32. Customising method according to any one of claims 24 to 31, **characterised in that** it comprises a step for checking the electronic components which have been customised (P) and/or are to be customised and/or are being customised carried out by a user, the user being able to interact with the data processing means (3) via a man/machine interface so as to stop the operation of the customising system.

33. Customising method according to any one of claims 24 to 32, **characterised in that** following the step d) for customising, it comprises a step for checking by the means for acquiring images (51) and/or the data processing means (3) to detect errors in customisation, the number of defective components (*) not exceeding the number of spare components present in the matrix of sockets (610) of the receiving carrier (6), the step for checking being at least followed by:
e) a step for reading the identifier and/or the stored co-ordinates corresponding to the components detected as being defective (*) by the means for acquiring images (51) and/or the data processing means (3),
f) a step for customising of spare components present in the matrix of sockets (610), by the electrical customising device (50) and/or the etching station (52) piloted by the data processing means (3), each spare component receiving the customisation information initially intended for each defective component (*),
g) a step for moving the etching station (52) and/or the electrical customising device (50), implemented by the data processing means (3) piloting the means of movement of said station and device, the latter moving away from the receiving carrier (6) comprising the customised components (P),
h) a step for setting the turntable (5) in motion implemented by the means of movement of the turntable piloted by the data processing means (3), followed by the stopping of the movement of the turntable when the co-ordinates of the position of a receiving carrier (6), monitored by the data processing means, correspond to the co-ordinates of the zone for charging/discharging of components recorded in a memory zone of the data processing means such that the transport means (4), piloted by the data processing means (3), are able to access the matrix of sockets of the receiving carrier (6),
i) a step for retrieval by the transport means (4), piloted by the data processing means (3), of the customised components (P) present in one direction of the matrix of sockets (610) of the receiving carrier (6),
j) a step for moving the transport means (4) to the reject station (7), followed by the rejection of the defective component or components (*) among the components retrieved by the transport means (4),
k) a step for moving the transport means (4) to the output system (2), followed by the depositing of the customised components in the receptacles (20) of the output system (2), each receptacle having received a defective component (*) being filled specifically,
1) a step for moving the transport means (4) to the location of at least one spare component present in the matrix of sockets (610) of the receiving carrier (6), followed by the retrieval of the customised spare component or components and replacement of the defective components (*), each spare component replacing a defective component (*), this step 1) being capable of being carried out equally before or after the step k),
m) a step for moving the transport means (4) to the output system (2), followed by the depositing of the customised spare components (R^{P}) in the receptacles to be filled specifically, such that the order of positioning of the customised components is observed,
n) a step for repeating the steps i) to m) in each direction of the matrix of sockets (610) of the receiving carrier (6),
o) a step for repeating the preceding steps, for all the receiving carriers (6) integral with the turntable (5).

34. Customising method according to any one of claims 26 to 32, **characterised in that**, when there are more defective components (*) than spare components (R) in the matrix of sockets (610) of a receiving carrier (6), the method comprises following the step for verification:
e) a step for reading the identifier and/or the stored co-ordinates corresponding to the components detected as being defective (*) in a first receiving carrier (6) by the means for acquiring images (51) and/or the data processing means (3),
f) a step for customising of the spare components present in the matrix of sockets (610), by the electrical customising device (50) and/or the etching station (52) piloted by the data processing means (3), a portion of the defective components (*) of the first receiving carrier (6) not being replaced due to an insufficient number of spare components in the first receiving carrier (6),
g) a step for moving the etching station (52) and/or the electrical customising device (50), implemented by the data processing means (3) piloting the means of movement of said station and device, the latter moving away from the first receiving carrier (6) comprising the customised components (P),
h) a step for setting the turntable (5) in motion implemented by the means of movement of the turntable piloted by the data processing means (3), followed by the stopping of the movement of the turntable when the co-ordinates of the position of the first receiving carrier (6), monitored by the data processing means, correspond with the co-ordinates of the zone for charging/discharging of components recorded in a memory zone of the data processing means such that the transport means (4), piloted by the data processing means (3), are able to access the matrix of sockets of the receiving carrier (6),
i) a step for charging of the customised components (P) and the customised spare components (R^{p}) of the first receiving carrier (6) in the receptacles (20) of the output system (2), by the transport means (4) piloted by the data processing means (3) operating in a plurality of successive steps in parallel directions in relation to the line or the column of the matrix, such that the order of positioning of the customised components (P, R^{P}) is observed in the output system (2), the components detected as being defective (*) being in each step transported and rejected by the transport means (4) into at least one bin (70) of the reject station (7), the customised components of the first receiving carrier (6) ordered with a positioning after the first defective component (*), not having been able to be replaced by a spare component from the first receiving carrier (6), being charged in successive steps in parallel directions in the receptacles (80) of the temporary storage zone (8),
j) a step for charging of the first receiving carrier (6) with components (C) coming from the input system (1), by the transport means (4) piloted by the data processing means (3) operating in a plurality of successive steps in parallel directions in relation to the line or the column of the matrix,
k) a step for setting the turntable (5) in motion implemented by the means of movement of the turntable piloted by the data processing means (3), followed by the stopping of the movement of the turntable when the co-ordinates of the position of a second receiving carrier (6), monitored by the data processing means, correspond to the co-ordinates of the etching station (52) and/or the electrical customising device (50) recorded in a memory zone of the data processing means, such that said stations are able to access the matrix of sockets of the second receiving carrier (6),
1) a step for customisation by the data processing means (3) of the components of the second receiving carrier (6), a certain number of components receiving the customising information initially intended for each defective component (*) of the first receiving carrier (6), not having been able to be replaced, of the first receiving carrier (6),
m) a step for moving the etching station (52) and/or the electrical customising device (50), implemented by the data processing means (3) piloting the means of movement of said station and device, the latter moving away from the second receiving carrier (6) comprising the customised components,
n) a step for setting the turntable (5) in motion implemented by the means of movement of the turntable piloted by the data processing means (3), followed by the stopping of the movement of the turntable when the co-ordinates of the position of the second receiving carrier (6), monitored by the data processing means, correspond to the co-ordinates of the zone of charging/discharging of components recorded in a memory zone of the data processing means such that the transport means (4), piloted by the data processing means (3), are able to access the matrix of sockets of the second receiving carrier (6),
o) a step for charging by the means of transport (4) of the customised components of the second receiving carrier (6), having received the customisation information initially intended for each defective component (*) not having been able to be replaced of the first receiving carrier (6), in the receptacles (20) subject to specific filling of the output system (2) such that the order of positioning of the customised components is observed,
p) a step for moving the customised components and customised spare components (P, R^{p}) in the first receiving carrier (6), the movement being carried out by the transport means (4) in successive steps in parallel directions, from the temporary storage zone (8) to the output system (2) such that the order of positioning of the customised components is observed,
q) a step for charging the remaining customised components of the second receiving carrier (6) in the output zone (2), in successive steps in parallel directions, such that the order of positioning of the customised components is observed.
